# EUROPÄISCHE PATENTSCHRIFT

(11) **EP 1 000 513 B1**
(45) Veröffentlichungstag und Bekanntmachung des Hinweises auf die Patenterteilung: **24.08.2005**
(21) Anmeldenummer: 98901941.9
(22) Anmeldetag: 05.01.1998
(51) Int. Cl.: H04Q 3/00

(54) **VERFAHREN ZUR ERZEUGUNG EINES NETZES**
METHOD OF PRODUCING A NETWORK
PROCEDE POUR REALISER UN RESEAU

(30) Priorität: 06.01.1997 DE 19700148
(43) Veröffentlichungstag der Anmeldung: 17.05.2000
(73) Patentinhaber: Deutsche Telekom AG, 53113 Bonn (DE)
(72) Erfinder: ERNST, Volker, D-42929 Wermelskirchen (DE); WERTHER, Björn, D-53117 Bonn (DE); WERTHER, Manfred, D-24358 Ascheffel (DE); WILLE, Frank, D-53849 Mechernich (DE); ZGOLL, Roman-Emanuel, D-53340 Meckenheim (DE)
(86) Internationale Anmeldenummer: PCT/EP1998/000027
(87) Internationale Veröffentlichungsnummer: WO 1998/031158

(56) Entgegenhaltungen:
- JEREB L ET AL: "PLANET: A TOOL FOR TELECOMMUNICATION NETWORK PLANNING AND ITS APPLICATIONS IN HUNGARY" IEEE JOURNAL ON SELECTED AREAS IN COMMUNICATIONS, Bd. 12, Nr. 7, 1.September 1994, Seiten 1261-1271, XP000465781
- LIU H ET AL: "OPTIMIZING KNOWLEDGE-BASED SYSTEM DESIGN" PROCEEDINGS OF THE CONFERENCE ON ARTIFICIAL INTELLIGENCE APPLICATIO, MIAMI BEACH, FEB. 24 - 28, 1991, Bd. VOL. 1, Nr. CONF. 7, 24.Februar 1991, INSTITUTE OF ELECTRICAL AND ELECTRONICS ENGINEERS, Seiten 269-274, XP000298935
- DIOGO J M B ET AL: "DYNAMIC PLANNING MODEL FOR URBAN TELEPHONE NETWORKS AND ITS APPLICATIONS" IEE PROCEEDINGS I. SOLID- STATE & ELECTRON DEVICES, Bd. 136, Nr. 4, PART I, August 1989, Seiten 283-290, XP000046416
- J. GRASSIN: "OPTIMALISATION DES RESEAUX DE TRANSMISSION DE DONNEES A STRUCTURE MULTIPOINT, programme REMU" ANNALES DE TELECOMMUNICATION, Bd. 27, Nr. 1/2, 1972, Seiten 11-18, XP002067007
- CRAVEIRINHA J ET AL: "A SURVEY OF APPLICATIONS OF MATHEMATICAL PROGRAMMING TO CIRCUIT-SWITCHED NETWORK PLANNING PROBLEMS" EUROPEAN TRANSACTIONS ON TELECOMMUNICATIONS AND RELATED TECHNOLOGIES, Bd. 3, Nr. 5, 1.September 1992, Seiten 499-515, XP000315368
- SCHADE L ET AL: "MODELLIERUNG, PLANUNG UND OPTIMIERUNG VON TELEKOMMUNIKATIONSNETZEN MIT DEM PROGRAMMSYSTEM NETWORKS" NACHRICHTENTECHNIK ELEKTRONIK, Bd. 44, Nr. 3, 1.Mai 1994, Seiten 33-37, XP000494311
- B.S. LIFSHITS ET AL.: "DETERMINING THE LOCATION OF EXCHANGES AND TOLL CENTERS OF AN URBAN TELEPHONE NETWORK WITH AID OF A COMPUTER" TELECOMMUNICATIONS AND RADIO ENGINEERING, Bd. 27/28, Nr. 8, 1.August 1973, XP002067008

## Beschreibung

Die Erfindung betrifft ein Verfahren zur Erzeugung und Optimierung eines Netzes, insbesondere eines Telekommunikations-, Wasser- oder Fernwärmeversorgungs- oder Stromnetzes.

Die Erstellung von Versorgungs-, Telekommunikations- oder z.B. Computemetzen ist, sofern die Netze eine gewisse Größe überschritten haben, für einen Menschen nur noch sehr schwer per Hand zu bewerkstelligen. In erster Linie kommt es daher bei der Erstellung des Netzes auf dessen Funktionstüchtigkeit an. Eine Optimierung ist, sofern das Netz einmal erstellt ist, nur noch punktuell möglich. Grobe Fehler lassen sich nachträglich meist nicht mehr beheben.

Das Dokument DIOGO J M B ET AL: "DYNAMIC PLANNING MODEL FOR URBAN TELEPHONE NETWORKS AND ITS APPLICATIONS" IEE PROCEEDINGS 1. SOLID- STATE & ELECTRON DEVICES, Bd. 136, Nr. 4, PART 1, August 1989, Seiten 283-290, XP000046416 offenbart ein Verfahren zur Optimierung des Netzausbaus für Ortsnetze. Auf der Basis prognostizierter Teilnehmerzahlen wird die Anzahl und Plazierung von Vermittlungsstellen optimiert. Es wird außerdem mit teilweise heuristischen Verfahren versucht die Netzkosten zu minimieren. Dabei werden Kostenfunktionen für die Leitungen und die Vermittlungsstellen eingesetzt Die reale Topographie des zu versorgenden Bereiches wird nicht berücksichtigt.

Das Dokument JEREB L ET AL: "PLANET: A TOOL FOR TELECOMMUNICATION NETWORK PLANNING AND ITS APPLICATIONS IN HUNGARY" IEEE JOURNAL ON SELECTED AREAS IN COMMUNICATIONS, Bd. 12, Nr. 7, 1. September 1994, Seiten 1261-1271, XP000465781 offenbart ein Verfahren zur Netzplanung eines Telekommunikationsnetzes. Das Verfahren betrifft die Planung von Verbindungsnetzen (trunk networks, inter urban networks), die mehr als einen Hauptverteilerknoten aber keine (End-)Verbraucher enthalten. Die Topologie des geplanten Netzes ist deswegen auch nicht baumartig. Bei dem offenbarten Verfahren geht es um die Planung von Netzen, insbesondere deren topologische Optimierung, ohne dabei die topographischen Gegebenheiten des Gebietes, das versorgt werden soll, in die Planung mit einzubeziehen.

Je nach Art und Aufbau des Netzes können unterschiedlichste Technologien zum Einsatz kommen. Meist stehen dem Netzplaner mehrere Komponenten zur Lösung eines Teilproblems des Netzes zur Verfügung. Bei einem Telekommunikationsnetz hat der Netzplaner unter anderem die Entscheidung zu treffen, ob für eine bestimmte Verbindung ein Kupfer- oder ein Glasfaserkabel Verwendung finden soll. Zudem hat er die Auswahl zwischen den unterschiedlichsten Typen von Kupfer- und Glasfaserkabeln, die sich in ihrer Kapazität, d.h., in ihrer Übertragungsrate und Anzahl der Leitungen pro Kabel, sowie ihrer maximal möglichen Übertragungsreichweite voneinander unterscheiden.

Das Erstellen eines Netzplans für ein Telekommunikationsnetz, welches ein bestimmtes Gebiet versorgen soll, wird bisher von erfahrenen Netzplanern fast ausschließlich per Hand durchgeführt. Wie oben aufgeführt, steht bei der Erstellung die Funktionstüchtigkeit des Netzes im Vordergrund. Ein Netz, welches technisch optimiert und möglichst kostengünstig in seinem Aufbau ist, kann mit den bisher bekannten Netzerstellungsverfahren nicht erstellt werden.

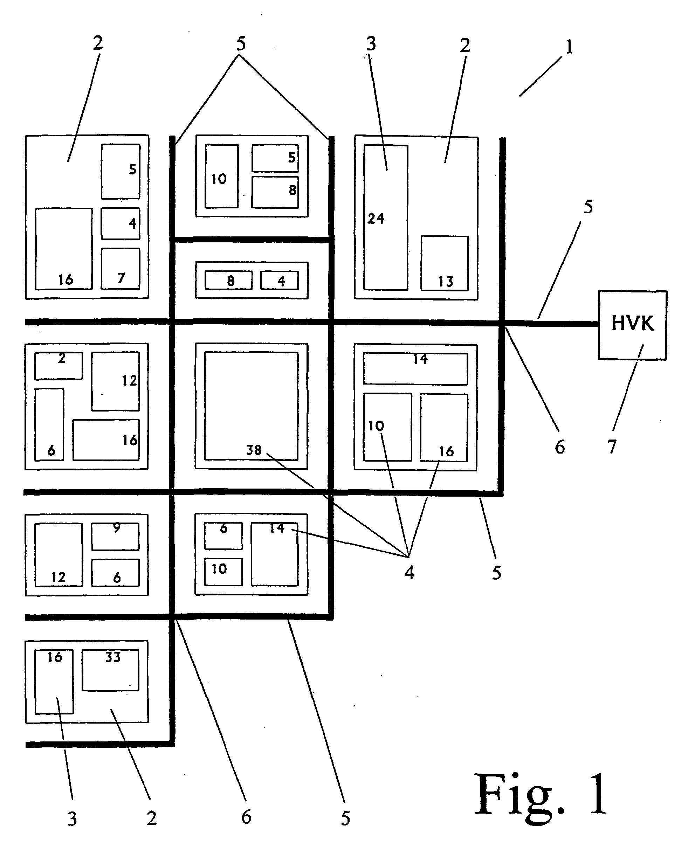

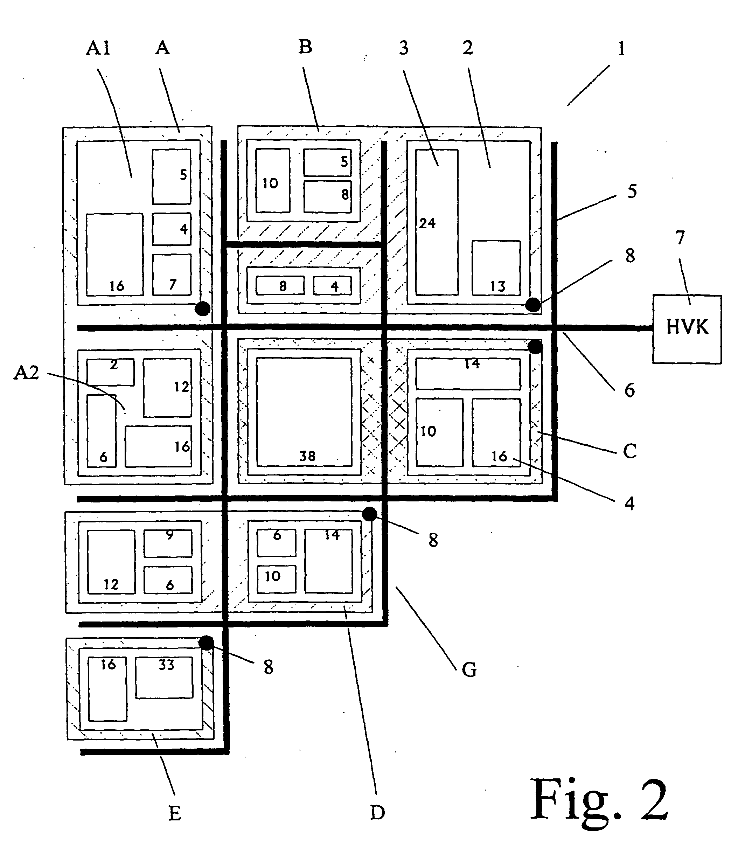

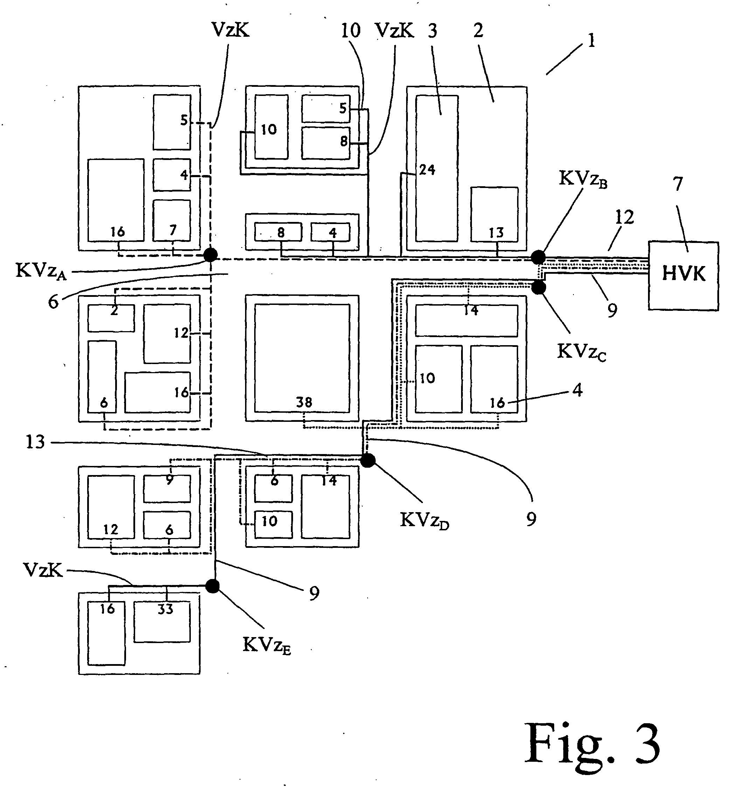

Nachfolgend wird das herkömmliche Erstellungsverfahren für ein Telekommunikationsnetz beschrieben, wobei nur die wesentlichen Prinzipien erläutert werden. In Figur 1 ist ein Gebiet 1 mit einzelnen Häuserblöcken 2 dargestellt, welches von einer Vermittlungsstelle (HVK) 7 aus versorgt werden soll. Die Häuserblöcke 2 weisen einzelne Verbraucher 3, deren Bedarf 4 an Telefonleitungen angegeben ist. Aus Gründen der Anschaulichkeit soll hier darauf verzichtet werden, daß die Verbraucher 3 neben Telefonleitungen auch noch andere Dienste anfordern. Die Häuserblöcke 2 sind durch Straßen 5 und Straßenkreuzungen 6 voneinander getrennt. Wie in Figur 2 dargestellt, unterteilt der Netzplaner das Gebiet 1 aufgrund der in der Vergangenheit vom Netzbetreiber erarbeiteten Planungsregeln und seines Erfahrungsschatzes in Bereiche A bis E auf, wobei meist mehrere Häuserblöcke z.B. A1 und A2 zu einem Bereich zusammengefaßt werden. Diese Bereiche werden nachfolgend Kabelverzweigungsbereiche oder KVz-Bereiche genannt. Die Unterteilung in die KVz-Bereiche erfolgt dabei in Abhängigkeit der einzusetzenden Technologie und in Abhängigkeit der von den einzelnen Ländern festgelegten Kabeltypolgien. Die Technologie bestimmt dabei die maximale und optimale Größe der einzelnen KVz-Bereiche. Im vorliegenden Fall hat sich der Netzplaner z.B. für Kupferkabel entschieden, wobei ein Kupferkabel verschiedene Paarigkeiten, z.B. 10, 20, 50, 75, 100, 150 oder 200 Kupferdoppeladern (CuDA) haben kann. Die Übertragungsreichweite der Kupferkabel ist für alle Verbraucher ausreichend und die maximale Kapazität eines KVz's (Kabelverzweigers) 8 möge 100 Kupferdoppeladern betragen. Anschließend legt der Netzplaner die Standorte der KVz's 8 (KVz_{A} - KVz_{E}) fest, von denen aus die Verzweigungskabel (VzK) mit den Telefonleitungen, wie in Figur 3 dargestellt, entlang der möglichen Trassen, d.h., entlang der Bürgersteige und unter den Straßenkreuzungen 11 zu den einzelnen Verbrauchern 3 geführt werden. Die in Hauptkabeln (Hk) 9 gebündelten Telefonleitungen des jeweiligen Bereichs werden vom KVz 8 des Bereichs direkt zur Vermittlungsstelle 7 geführt. Dabei werden die Kabel 9 möglichst in schon vorhandenen Kabeltrassen der anderen Bereiche geführt, um Kabelverlegungskosten zu sparen.

Wie der Figur 2 zu entnehmen ist, muß der Bereich A mit mindestens 68 Telefonleitungen, der Bereich B mit mindestens 72, der Bereich C mit mindestens 78, der Bereich D mit mindestens 57 und der Bereich E mit mindestens 49 Telefonleitungen versorgt werden. Dies bedeutet, daß in den einzelnen Bereichen mehrere Kupferverzweigungskabel (Cu-VzK) verlegt werden müssen, deren Ausnutzung einerseits von der Anzahl der benötigten Kupferdoppeladern (CuDA) und andererseits von der Typologie der Kabel abhängig ist. So wird z.B. für die eine Häuserblockseite des Häuserblocks A1 ein Cu-VzK mit 20 CuDA und für die andere Häuserblockseite ein Cu-VzK mit 50 CuDA benötigt. Hieraus ergeben sich bedingt durch die KVz-Bereichseinteilung unterschiedliche Füllungsgrade der Kupferverzweigungskabel Cu-VzK.

Die auf diese Weise gebildeten KVz-Bereiche müssen nun über sogenannte Hauptkabel (Hk) 9 mit der Vermittlungsstelle (HVK) 7 verbunden werden. So wird z.B. zur Versorgung des KVz-Bereiches E ein Hk mit netto 49 CuDA benötigt. Das vorzugsweise zu verwendende Hk mit der nächst höheren Paarigkeit von 50 CuDA ist somit zu 98% ausgenutzt. Der Planer hat nun zwei Möglichkeiten das Hk des Bereichs E zur Vermittlungsstelle 7 zu führen. Dabei führt er das Hk entlang von Trassen zu einem KVz eines der Vermittlungsstelle näher gelegenen Bereichs A oder D, um eventuell das Hk des Bereichs E mit den Hk's anderer Bereiche in ein Hk größerer Kapazität oder anderer Technik, z.B. Glasfaser, zu überführen. So kann der Planer entweder das Hk des Bereichs E zum KVz des Bereichs D oder A führen. Im ersten Fall muß das Hk, welches von der Vermittlungsstelle 7 zum KVz des Bereiches D führt eine Mindestkapazität von 106 CuDA (Bereich E 49 CuDA und Bereich D 57 CuDA) haben. Im zweiten Fall muß das Hk, welches von der Vermittlungsstelle 7 zum KVz des Bereiches A führt eine Mindestkapazität von 117 CuDA (Bereich E 49 CuDA und Bereich A 68 CuDA) haben. Da jedoch kein Cu-Kabel mit 117 oder 109 CuDA zur Verfügung steht, muß das Cu-Kabel mit der nächst höheren Kapazität, also 150 CuDA gewählt werden. Im ersten Fall beträgt bei einem Cu-Kabel mit 150 CuDA der Ausnutzungsgrad des Hk's 70,67% im zweiten Fall 78%. Für die Auswahl der optimalen Netzvariante müssen nun die Kosten von beiden Wegen berechnet werden. Dieses Verfahren wird für alle KVz-Bereiche fortgeführt.

Es ist offensichtlich, daß für die optimale Netzgestaltung, alle möglichen Kombinationen für die Bereichsabgrenzung und der Trassenführung der Hk's betrachtet werden müssen. Eine falsche Wahl der Bereichsgrenzen der KVz-Bereiche schon zu Beginn der Netzplanung führt zu Folgefehlern, die nachträglich nicht mehr behebbar sind.

Da zudem die manuelle Erstellung eines größeren Netzes mehrere Wochen dauern kann, und Netze oft unter erheblichem Zeitdruck erstellt werden müssen, ist es meist nicht möglich, Alternativlösungen bzgl. der Bereichsfestlegung zu erstellen. Eine Optimierung hinsichtlich einer guten Auslastung des Netzes und Kostenminimierung findet daher nicht statt.

Es ist daher sehr unwahrscheinlich, daß der Netzplaner mit der vorbeschriebenen Methode gerade die Netzvariante erstellt, deren Kosten minimal ist und deren Wirtschaftlichkeit besonders hoch ist.

Aufgabe der Erfindung ist daher, ein Verfahren bereitzustellen, mittels dem sich in kürzester Zeit bei geringem Arbeitsaufwand ein kostengünstiges Netz hoher Funktionstüchtigkeit und Leistungsausnutzung erzeugen läßt.

Diese Aufgabe wird erfinderisch gelöst, indem in einem ersten Verfahrensschritt ein Graph bestehend aus Kanten und Knoten generiert wird, wobei der Graph alle technisch möglichen und/oder vorgebbaren Verbindungswege des Netzes umfaßt, und sich die Länge und Richtung der Kanten aus der realen Topographie der Straßenabschnitte und vorgebbaren . Netzleitungswege des mittels des Netzes zu versorgenden Gebiets ergibt, und die Knoten die Kreuzungspunkte der Kanten bzw. der Straßen und/oder Netzleitungswege sind; und in einem zweiten Verfahrensschritt die Verbraucher des Gebiets dem Graphen zugeordnet werden, derart, daß jeder Verbraucher durch eine zusätzliche Verbraucherkante mit der nächstliegenden Kante oder dem nächstliegenden Knoten des Graphen verbunden wird; und in einem dritten Verfahrensschritt ein möglichst kostengünstiger Baum durch Eliminieren nicht benötigter Kanten aus dem Graphen generiert wird, derart, daß zwischen dem Hauptverteilerknoten und jedem Verbraucher nur genau eine Verbindung durch die Kanten und Knoten des Baumes besteht; und das in einem vierten Verfahrensschritt die Belastung der Kanten des Baumes entsprechend der Bedürfnisse und Anforderungen der Verbraucher ermittelt wird; und daß in einem sich anschließenden fünften Verfahrensschritt die Dimensionierung und Auswahl der einzusetzenden Technologien für jede Kante, Verbraucherkante und Knoten des Baumes aufgrund der in den Verfahrensschritten I-IV berechneten Belastungen der Kanten erfolgt.

Mit dem erfinderischen Verfahren ist vorteilhaft ein Netz erstellbar, bei dem einerseits dessen Länge besonders kurz ist, wodurch es besonders kostengünstig zu erstellen ist, da die Materialkosten und die Verlegungskosten gering sind, und zum anderen auch die Auslastung des Netzes besonders hoch ist, wodurch die Netzbetreiberkosten niedrig bleiben. Das Verfahren ist insbesondere für Telekommunikations-, Wasser- oder Fernwärmeversorgungs- oder Stromnetzes anwendbar. Durch die Umsetzung des Verfahrens in ein auf einer Datenverarbeitungsanlage lauffähiges Computerprogamm kann zudem eine einfache manuelle Nachoptimierung des erstellten Netzes in der Weise durchgeführt werden, in dem bestimmte Verbindungswege für den Graphen fest vorgebbar sind, so daß das Verfahren ein Netz erzeugt, welches z.B. die Telekommunikationseinrichtung(en) insbesondere Kabel entlang dieses Verbindungsweges führt.

Durch das mehrmalige Anwenden des Verfahrens auf unterschiedliche Ebenen des Netzes, bedingt durch unterschiedliche zum Einsatz kommende Technologien für die Ebenen, kann sehr schnell ein kompletter Netzplan erzeugt werden. Bei Einsatz eines Computers z.B. für ein Telekommunikationsnetz stehen sofort nach Beendigung des Verfahrens für sämtliche Kanten die zu verlegenden Kabeltypen sowie deren Länge und Paarigkeit, und für jeden Knoten die benötigte Verbindungstechnik in einer Datenbank bereit. Hierdurch kann sehr schnell eine Kosten- und Materialübersicht erstellt werden. Auch lassen sich aus den erzeugten Netzplandaten Karten für den Aufbau und die Wartung des Netzes erstellen.

Für ein Wassernetz lassen sich direkt die benötigten Rohrtypen, deren Durchmesser und z.B. Gefälle, die erforderlichen Pumpen und deren Standorte, etc. Ablesen.

Vorteilhaft lassen sich alle Verfahrensschritte leicht mittels eines Computerprogramms schnell und komfortabel durchführen, so daß in relativ kurzer Zeit beliebig viele Netzpläne für ein Gebiet erstellbar sind. Durch geringfügige Änderungen der vorgegebenen Parameter Straßen- und Trassenführung, sowie Verlegungs- und Materialkosten und jeweils für eine Netzebene zu verwendende Technologie, kann nach und nach ein optimaler Netzplan erzeugt werden. Diese Parameter können jedoch auch mittels eines Batch-Programms oder z.B. genetischer Algorithmen oder Evolutionsstrategien für jeden Erstellungsvorgang eines Netzplanes vorgegeben bzw. ausgewählt werden. Somit kann durch den Einsatz des Computers ein Netzplan ohne manuelles Nacharbeiten optimiert werden.

Nachfolgend wird das erfindungsgemäße Verfahren anhand von Zeichnungen mittels der Erstellung eines Telekommunikationsnetzes beispielhaft in seinen einzelnen Verfahrensschritten näher erläutert.

Es zeigen:
- Figur 1: Ein Gebiet 1 mit einzelnen Verbrauchern 3, die entlang von Straßen angeordnet sind;
- Figur 2: das Gebiet 1, das manuell nach den herkömmlichen Verfahren von einem Netzplaner in Bereiche A-E aufgeteilt ist;
- Figur 3: einen Netzplan für das Gebiet 1, der manuell nach den herkömmlichen Verfahren von einem Netzplaner erstellt worden ist;
- Figuren 4 bis 8: das erfindungsgemäße Verfahren;

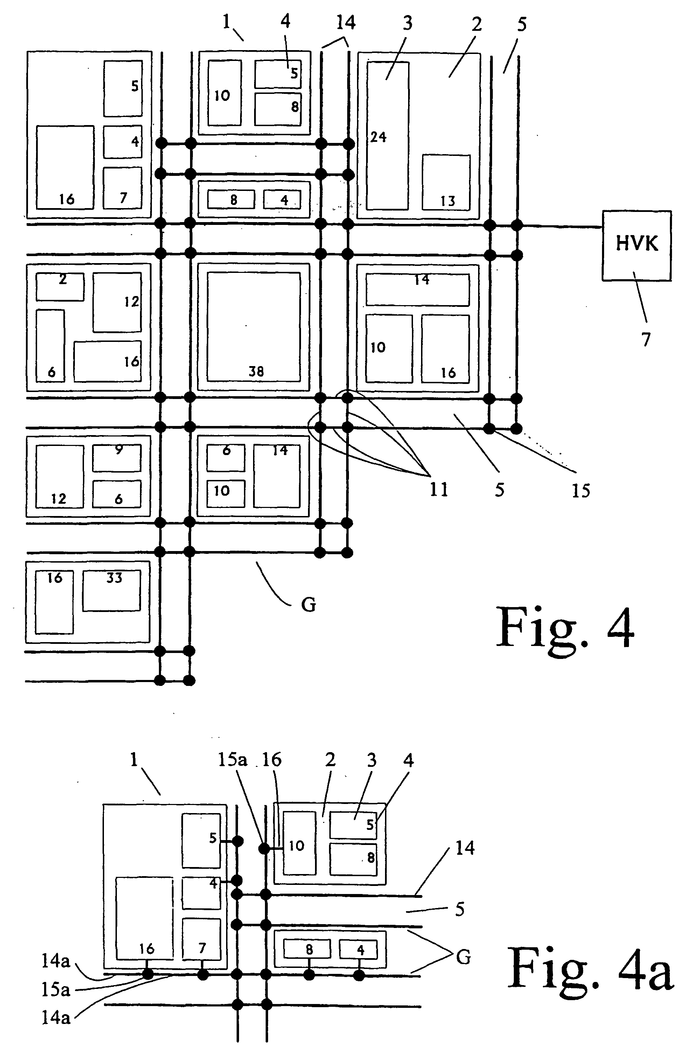

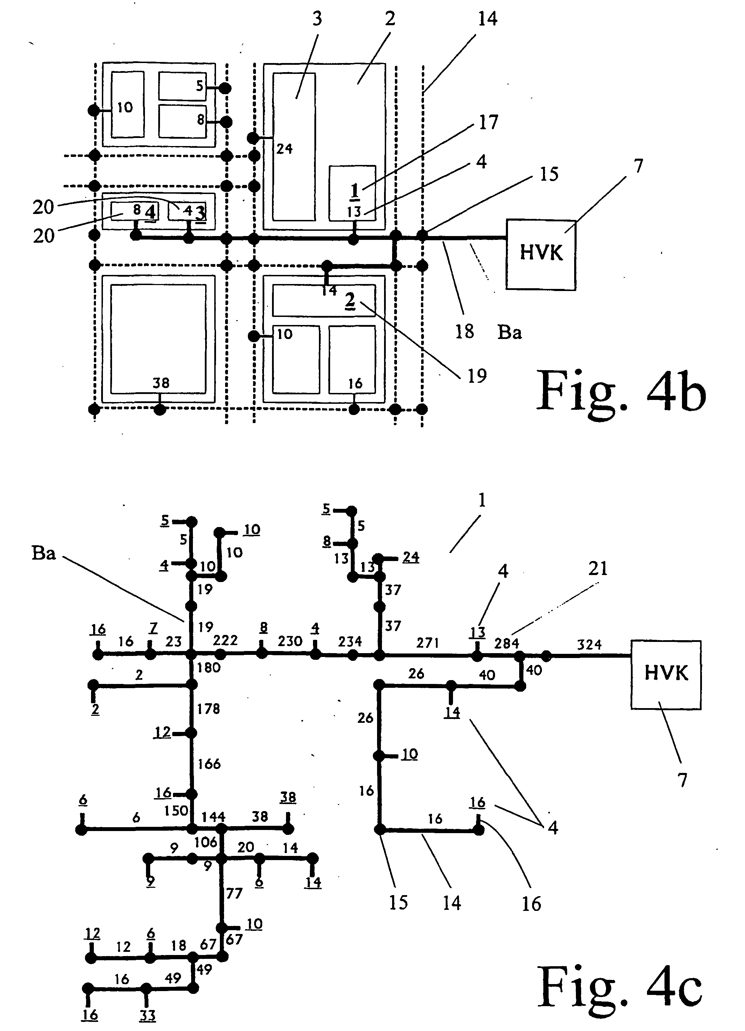

- Figur 4: ein in das Gebiet 1 mittels des erfindungsgemäßen Verfahrens eingefügter Graph G, wobei entlang jeder Straßenseite eine Kante 14 für den Graphen G vorgesehen ist;
- Figur 4a: einen Ausschnitt aus dem Gebiet 1 der Figur 4; das erfindungsgemäße Verfahren verbindet die Verbraucher 3 mittels Verbraucherkanten 16 mit dem Graphen G;
- Figur 4b: einen Ausschnitt aus dem Gebiet 1; Erzeugen des Baumes Ba durch schrittweises Verbinden der Verbraucher 3 mit dem schon erzeugten Teil des Baumes
- Figur 4c: den mittels des Verfahrens für das Gebiet 1 erzeugten Baum und die den Kanten 14 zugeordnete Belastung 21;

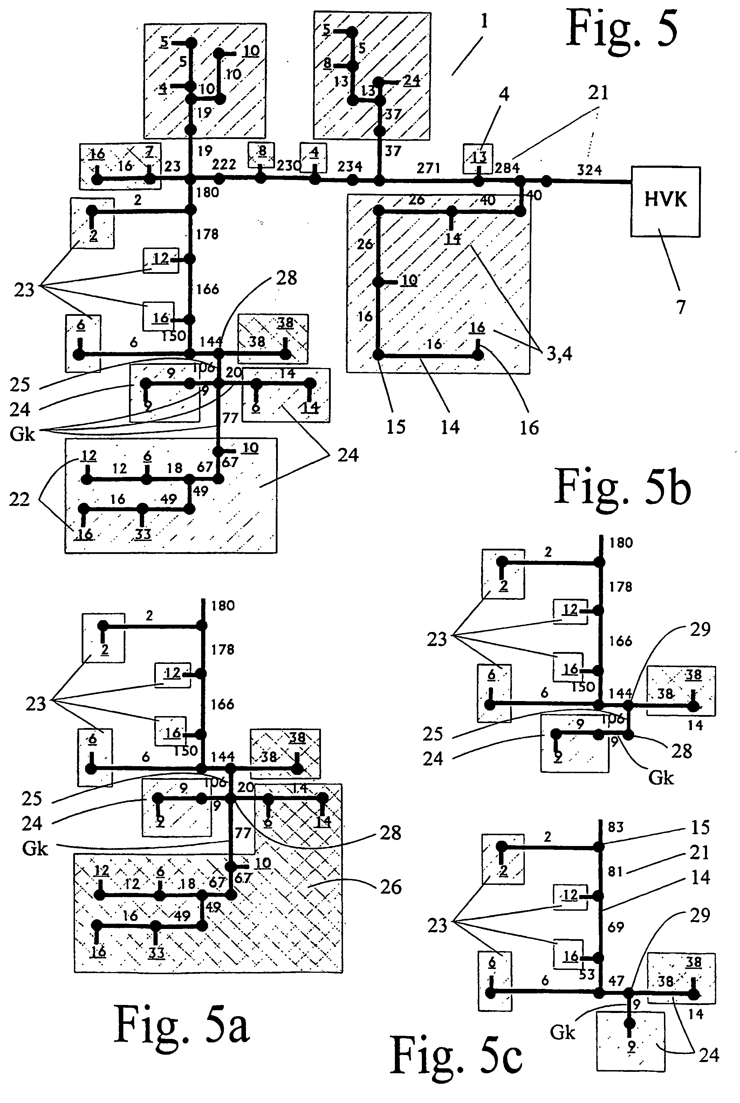

- Figur 5: das Gebiet 1 mit den nachfolgend beschreiben Verfahrensschritten V a) bis V e) erzeugten KVz-Unterbereichen;
- Figur 5a: einen Ausschnitt aus dem Gebiet 1, wobei zwei KVz-Unterbereiche zu einem KVz-Bereich 26 zusammengefaßt sind;
- Figur 5b: den Ausschnitt aus Figur 5a, wobei der KVz-Bereich 26 mit den beiden Grenzkanten Gk vom Baum abgeschnitten ist;
- Figur 5c: den Ausschnitt aus Figur 5a, wobei die Grenzkante des KVz-Unterbereichs mit einem Bedarf von 9 an den nächsten Knoten 29 angeschlossen worden ist;

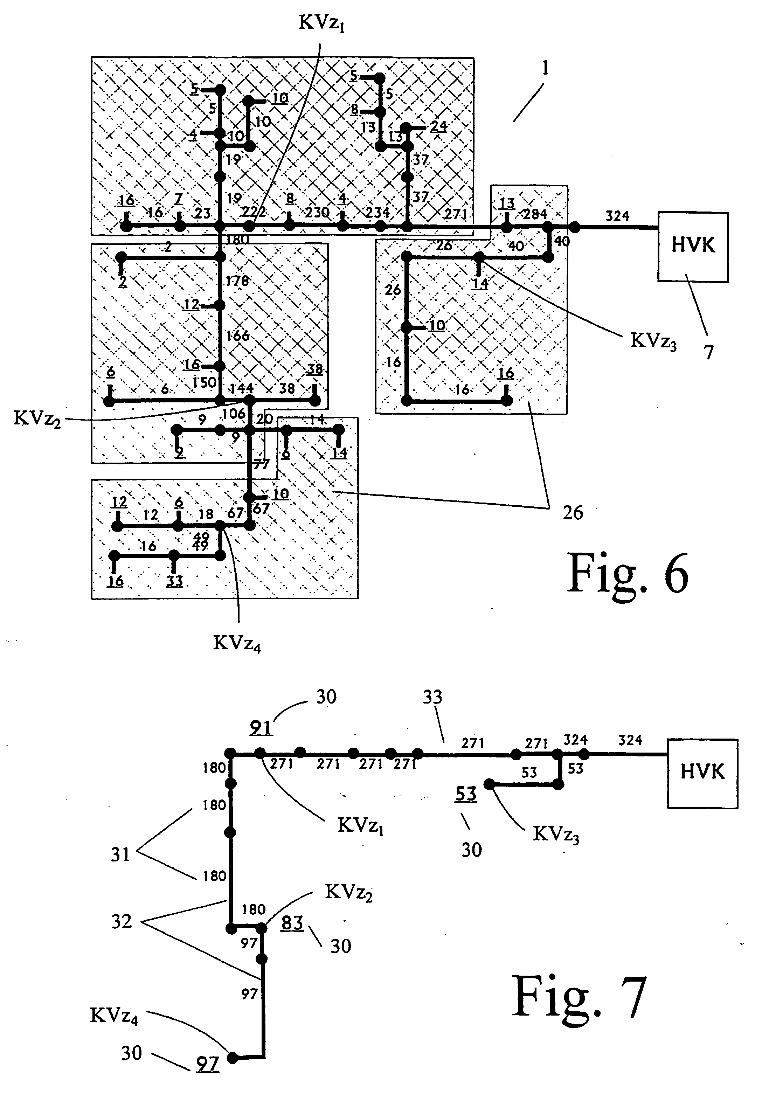

- Figur 6: das Gebiet 1 mit den erzeugten KVz-Bereichen 26 und den in deren Schwerpunkten angeordneten KVz₁ bis KVz₄;
- Figur 7: mittels der nachfolgend beschriebenen Verfahrensschritte V q) bis V s) erzeugten neuen Baum 33

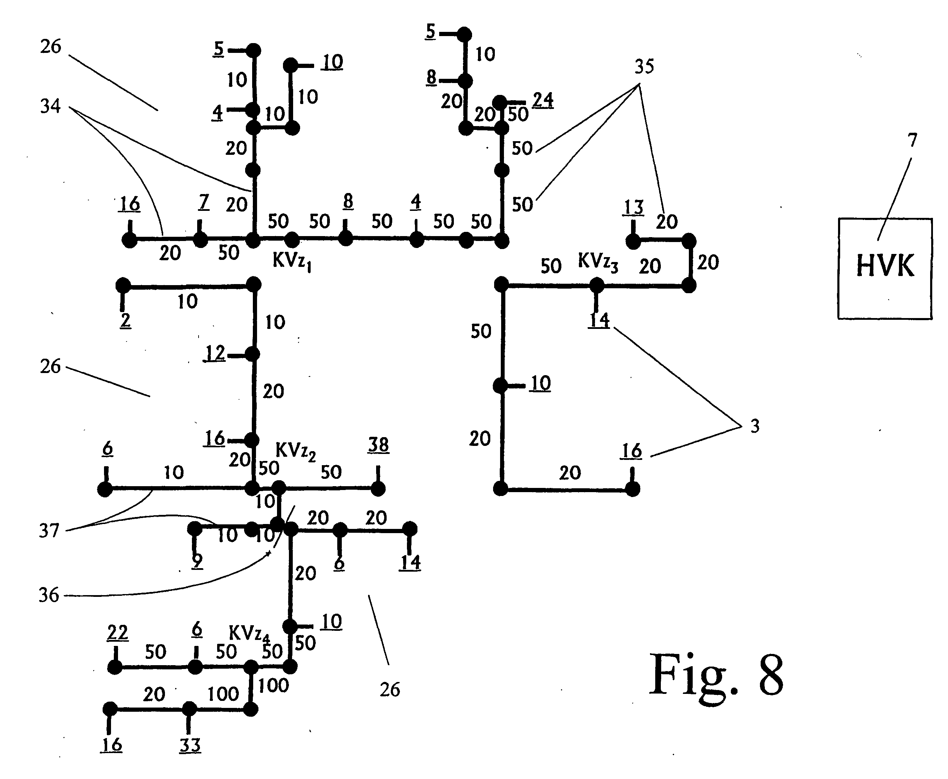

- Figur 8: die KVz-Bereiche 26, wobei die Paarigkeiten 35 den einzelnen Kanten 14 bzw. Straßenabschnitten zugeordnet sind.

Für das in Figur 1 dargestellte Gebiet 1, bestehend aus Häuserblöcken 2 auf denen Verbraucher 3 beliebig angeordnet sind, sowie Straßen und vorgegebenen Netzleitungswegen 5 und deren Kreuzungspunkte 6, wird mittels des Verfahrens, dargestellt in den Figuren 4 bis 8, ein Telekommunikationsnetz erstellt, welches das Gebiet 1 mit einer Vermittlungsstelle 7 verbindet. Der Anschaulichkeit wegen, sind nur Verbraucher 3 vorhanden, die alle nur einen Bedarf eines bestimmten Typs, z.B. Telefonleitungen haben.

Da das Verfahren beliebig oft auf bestimmte, durch die Technologien vorgebbaren Ebenen durchführbar ist, kann die Vermittlungsstelle 7 jedoch wie ein Verteilerknoten 8 behandelt werden.

Figur 4 zeigt einen Straßengraphen, der mit dem Verfahrensschritt I erzeugt wird. Es wird angenommen, daß nur Straßen und keine vorgegebenen Netzleitungswege existieren. Jeder Straßenseite ist eine Kante 14 des Graphen G zugeordnet worden. An den Straßenkreuzungen 6 ergeben sich daher vier Knoten 15, wobei die vier Straßenquerungen 11 jeweils eine eigene Kante 14 bilden.

Im Verfahrensschritt II, der mit Figur 4a dargestellt ist, werden die Verbraucher 3 mittels Verbraucherkanten 16 mit dem Graphen G verbunden. Dies geschieht entweder dadurch, daß der kürzeste Weg vom Anschlußpunkt des jeweiligen Verbrauchers 3 zum Graphen G gewählt wird oder daß die Verbraucherkante 16 durch eine entsprechende Vorgabe entlang einer bestimmten Trasse geführt werden muß, wodurch die Länge der Verbraucherkante 16 bestimmt ist. Trifft die Verbraucherkante 16 auf eine Kante 14 des Graphen G, so wird diese Kante 14 in zwei Kanten 14a aufgeteilt und der Verbindungspunkt von Kante 14 und Verbraucherkante 16 wird ein neuer Knoten 15a. Die Kanten 14a entsprechen dabei den Kanten 14.

Nach Abschluß des Verfahrensschritts II sind sämtliche Verbraucher 3 mit dem Graphen G verbunden. Nun wird mit Verfahrensschritt III, wie in den Figuren 4b und 4c dargestellt, ein Baum Ba erzeugt, bei dem jeder Verbraucher 3 über eine eindeutige Verbindung, bestehend aus Verbraucherzweigen 16, Kanten 14 und Knoten 15 mit der Vermittlungsstelle 7 in Verbindung ist. Dazu wird zunächst der Verbraucher 17 im Graphen G gesucht, bei dem die Anbindungskosten zur Vermittlungsstelle 7 am geringsten sind. Die Anbindungskosten bestimmen sich dabei z.B. durch die verwendete Technologie der Kabel und der Verlegungskosten incl. der Ausschachtungskosten. Dieser Verbraucher 17, die Kanten 14 und Knoten 15, die diesen mit der Vermittlungsstelle 7 verbinden, werden anschließend markiert und bilden den markierten Verbindungsweg 18 (Verfahrensschritt Ia). Als nächstes (Verfahrensschritt Ib) werden alle Verbraucher 3 nacheinander mit der Vermittlungsstelle 7 verbunden, derart, daß jeweils stets zuerst der Verbraucher 19 mit der Vermittlungsstelle 7 verbunden wird, dessen Anbindungskosten unter Berücksichtigung schon markierter Kanten 14 und/oder Knoten 15 an den bislang markierten Verbindungsweg 18 von allen noch nicht markierten Verbrauchern 3 am niedrigsten sind. Der gefundene Anbindungsweg wird zusammen mit seinem Verbraucher markiert. Die Verfahrensschritte Ia und Ib bestehen lediglich aus einfachen Suchalgorithmen und sind leicht als Computerprogramm umsetzbar.

Sobald sämtliche Verbraucher 3 markiert, d.h., mittels des erzeugten Baumes Ba verbunden sind, werden alle nicht markierten Kanten 14 und Knoten 15 des Graphen G eliminiert. Anstatt die Kanten 14 und Knoten 15 zu eliminieren, können jedoch auch für die weiteren Verfahrensschritte nur noch die markierten Kanten 14 und Knoten 15 Verwendung finden. programmtechnisch ist sicherlich die letzte Variante vorzuziehen.

Der erzeugte Baum Ba ist von der Gestalt, daß er für die vorgegebenen möglichen Trassen- bzw. Kabelführungen 5 im Gebiet 1 ein Minimum bzgl. Anbindungskosten (Verlegungs- und Materialkosten) bildet.

Für die Gestaltung eines Computerprogramms ist es sinnvoll, in einem Verfahrensschritt IV den übriggebliebenen Kanten 14 des Baumes Ba deren Belastung 21 zuzuordnen. Dabei wird nachfolgend ein möglicher Algorithmus beschrieben. Es ist aber für die Durchführung des Verfahrens unerheblich, wenn ein anderer Algorithmus verwendet wird, oder wenn der Verfahrensschritt IV übersprungen wird und im Verfahrensschritt V jeweils bei Bedarf die Belastung 21 der Kanten 14 bestimmt wird.

Der mögliche Algorithmus ist dergestalt, daß zu Beginn allen Kanten 14 des Baumes Ba die Belastung "0" (Null) zugeordnet wird, und daß danach nacheinander von jedem Verbraucher 3 entlang der Kanten 14 und Knoten 15 zur Vermittlungsstelle 7 entlang gelaufen wird, und dabei jeder entlanggelaufenen Kante 14 der Bedarf 4 des Verbrauchers 3 hinzuaddiert wird, von dem aus gerade gestartet worden ist.

Nachdem durch die vorbeschriebenen Verfahrensschritte der optimierte Baum bzw. Trassengraph Ba erstellt worden ist, soll im Folgenden (Figuren 5 bis 6) beschrieben werden, wie die am Baum Ba angeschlossenen Verbraucher 3 zu KVz-Bereichen 26 zusammengefaßt werden, wobei wiederum eine Optimierung durch das Verfahren dahingehend vorgenommen wird, derart, daß möglichst wenige KVz-Bereiche 26 mit einer optimierten Auslastung der eingesetzten Technik erzeugt werden.

Zur Generierung der KVz-Bereiche 26 wird zuerst die Kapazität der die einzelnen KVz-Bereiche versorgenden KVz's festgelegt (Verfahrensschritt Va). Die Kapazität hängt dabei von der Technik der einzusetzenden KVz's ab. Die Kapazität bestimmt dabei die maximale Anzahl der für einen KVz-Bereich zur Verfügung stehenden Kupferdoppeladern, Glasfasern, etc.. Auch sind die maximalen Reichweiten der im KVz-Bereich 26 einzusetzenden Übertragungstechniken vorzugeben, wodurch in dem Verfahrensschritt Vb) die Größe der KVz-Unterbereiche 23 begrenzt wird.

Ein einzelner Verbraucher 3 kann, in Abhängigkeit von seinem Bedarf 4 einen KVz-Unterbereich 23 oder sogar einen eigenen KVz-Bereich 26 bilden, wobei der Bedarf in diesem Fall auch größer als die in Verfahrensschritt Va) festgelegte Kapazität sein kann. Es ist empfehlenswert, daß diese Verbraucher 3, deren Bedarf 4 größer als die in Schritt Va) festgelegte Kapazität des KVz's ist, als jeweils ein KVz-Bereich 26 definiert werden, wobei diesen Verbrauchern jeweils soviel Übertragungstechnik zugeordnet wird, daß der Bedarf des jeweiligen Verbrauchers gedeckt ist, derart, daß dem Knoten 15, an den die Grenzkante Gk eines derartigen Verbrauchers 3 angrenzt, für den in Verfahrensschritt Vs) zu generierenden neuen Baum 33 ein Bedarf zugeordnet wird, der einem mehrfachen der in Schritt Va) festgelegten Kapazität entspricht, so daß der Bedarf des Verbrauchers gerade gedeckt ist, und daß danach dieser Verbraucher 3 aus dem Baum Ba eliminiert wird, wobei der Knoten der Schwerpunkt bzw. Ort des dem Verbraucher 3 zugeordneten KVz's ist.

Anschließend werden nun alle Markierungen von den Verbraucher 3 entfernt, sofern solche Markierungen gesetzt worden sind.

Danach wird ein noch nicht markierter Verbraucher 22 im Baum Ba gesucht, der am Ende eines Zweiges des Baumes Ba sitzt. Dabei zeichnet sich dieser Verbraucher 22 dadurch aus, daß er mit seiner Verbraucherkante 16 an einem Knoten anliegt, an dem nur noch genau eine Kante 14 angrenzt. Ausgehend von diesem Verbraucher 22 wird solange entlang der Verbraucherkante 16, der Kanten 14 und Knoten 15 in Richtung der Vermittlungsstelle 7 entlang gelaufen, bis eine Grenzkante Gk erreicht wird. Eine Grenzkante Gk zeichnet sich dadurch aus, daß sie mit einem Knoten 15 in Verbindung ist, an dem eine Kante 25 angrenzt, deren Belastung 21 größer als die in Verfahrensschritt Va) festgelegte. Eine Kante 14 kann jedoch auch dann zu einer Grenzkante Gk eines KVz-Unterbereichs 23 werden, sobald ausgehend vom Verbraucher 22 die ebenfalls in Verfahrensschritt Va) festgelegte Reichweite der für diesen KVz-Bereich 26 einzusetzenden Übertragungstechnik überschritten wird, selbst wenn diese Grenzkante Gk kapazitätsmäßig noch zu dem KVz-Unterbereich 23 gehören würde.

Figur 5 zeigt alle KVz-Unterbereiche 23, die mit dem beschriebenen Verfahren erzeugt werden. Dabei ist zu beachten, daß diese Aufteilung in KVz-Unterbereiche 23 eindeutig und reproduzierbar erfolgt.

Mittels der sich anschließenden Verfahrensschritte Vf) bis Vp) werden nun die KVz-Unterbereiche 23 nach und nach, wenn möglich zu KVz-Bereichen 26 zusammengefaßt oder umgewandelt, wobei darauf geachtet wird, daß die Kapazitätsgrenze des KVz's 8 von der Belastung 30 des zusammengefaßten KVz-Bereichs 26 nicht überschritten wird. Nach Abschluß dieser Verfahrensschritte ist dann jeder Verbraucher 3 eindeutig einem KVz-Bereich 26 zugeordnet.

Bei der Erzeugung der KVz-Bereiche 26 ist ferner darauf zu achten, daß lediglich räumlich benachbarte KVz-Unterbereiche 23 zusammengefaßt werden dürfen, da sonst der Bereichszusammenhang nicht mehr gegeben ist. Dies würde eine Wartung und Fehleranalyse für den späteren Netzbetreiber fast unmöglich machen, da im Störungsfall keine kausalen Rückschlüsse mehr aus den auftretenden Fehlern hinsichtlich der Störungen gemacht werden können. Räumlich benachbart heißt dabei, daß sie an demselben Knoten 15 angrenzen und im oder gegen den Uhrzeigersinn laufend direkt aneinandergrenzen.

Die Verfahrensschritte Vf) bis Vp) werden nachfolgend anhand der Figuren 5 bis 6 näher erläutert, wobei Figur 5 die Ausgangssituation für den Verfahrensschritt Vf) und die Figur 6 das Endergebnis nach Abschluß des Verfahrensschrittes Vp) darstellt.

Zuerst werden mit dem Verfahrensschritt Vf) diejenigen KVz-Unterbereiche 23 aus dem Baum Ba herausgesucht, die mit keinem benachbartem KVz-Unterbereich 24, dessen Belastung kleiner oder gleich groß ist, zu einem größeren KVz-Unterbereich 23 zusammengefaßt werden können, da die Summe der Belastungen der beiden Nachbar-Kvz-Unterbereiche größer als die Kapazität des KVz's ist. Diese KVz-Unterbereiche 23 werden zu KVz-Bereichen 26 umgewandelt und werden mit den Verfahrensschritten Vh) und Vi) aus dem Baum entfernt, wobei der Bedarf dieses neuen KVz-Bereichs 26 von allen diesen mit der Vermittlungsstelle 7 verbindenden Kanten 14 abgezogen wird und für die Erzeugung der anderen KVz-Bereiche 26 nicht mehr berücksichtigt wird. Für eine detailliertere Beschreibung der Verfahrensschritte Vh) und Vi) wird auf die Ansprüche verwiesen.

Im Folgenden wird beschrieben, wie KVz-Unterbereiche 23 zu größeren KVz-Unterbereichen 23 zusammengefaßt werden. Wie in Figur 5 dargestellt, liegen die drei KVz-Unterbereiche 24 an einem gemeinsamen Knoten 28 an. Alle drei KVz-Unterbereiche 24 sind von den vorherigen Verfahrensschritten noch nicht beeinflußt worden, da ihr Bedarf entweder nicht größer als die Kapazität des KVz's ist oder die Summe ihres und des angrenzenden Nachbar-KVz-Unterbereichs nicht größer als die Kapazität des KVz's ist. Der Bedarf eines KVz-Unterbereichs 24 ist dabei von seiner Grenzkante Gk direkt ablesbar. So haben die drei am Knoten 28 angrenzenden KVz-Unterbereiche 23 einen Bedarf von 9, 77 und 20. Die Summe der jeweils benachbarten KVz-Unterbereiche 23 ergibt entweder 86 oder 97. In einem nachfolgenden Verfahrensschritt werden nun die KVz-Unterbereiche 24 zu einem KVz-Bereich 26 zusammengefaßt, deren Summe am größten ist, also die beiden KVz-Unterbereiche mit einem Gesamtbedarf von 97. Dieser KVz-Bereich 26 wird nun als nächstes vom Baum abgeschnitten bzw. eliminiert und/oder für die weiteren Verfahrensschritte nicht mehr berücksichtigt (Figur 5b). Würden noch mehrere KVz-Unterbereiche 24 an dem Knoten 28 hängen, so könnten diese ebenfalls zusammengefaßt werden. Dabei ist jedoch auf den Netzzusammenhang zu achten. Im vorliegenden Fall liegt jedoch nur noch ein einziger KVz-Unterbereich 24 an dem Knoten 28. Die Grenzkante Gk dieses KVz-Unterbereichs wird nun solange in Richtung Vermittlungsstelle 7 verschoben, bis sie mit ihrem dem KVz-Unterbereich 23 abgewandten Ende an einen nächsten Knoten 29 anstößt, an dem ein weiterer KVz-Unterbereich 23 hängt. Ab diesem nächsten Knoten 29 werden nun in Richtung der Vermittlungsstelle von den Kanten 14 die Belastung des zuvor eliminierten KVz-Bereichs 26 subtrahiert (Figur 5c). Das Zusammenfassen der KVz-Unterbereiche 23 wird solange fortgesetzt, bis keine KVz-Unterbereiche 23 im Baum Ba mehr vorhanden sind. Das genaue Verfahren des Zusammenfassens der KVz-Unterbereiche 23 zu KVz-Bereichen 26 kann den Verfahrensansprüchen Vj) bis Vp) in den Ansprüchen entnommen werden. Wie in Figur 6 dargestellt, ist durch das erfindungsgemäße Verfahren das Gebiet in vier KVz-Bereiche 26 aufgeteilt worden.

Nachdem die Verbraucher 3 den erzeugten KVz-Bereichen 26 zugeordnet worden sind, können die einzelnen Verzweigungskabel VzK, welche die KVz's mit den zugeordneten Verbrauchern 3 verbinden, dimensioniert werden. Hierzu werden die Verfahrensschritte Vu) bis Vw) durchgeführt. Mit dem Verfahrensschritt Vu) wird der Dimensionierungsvorgang begonnen. Der Verfahrensschritt Vu) ist als Initialisierungschritt zu verstehen, dabei wird allen Kanten 14,37 des Baumes Ba die Belastung "0" (Null) zugeordnet. Anschließend wird in Schritt v) von jedem Verbraucher 3 entlang der Kanten 14,37 und Knoten 15 zum KVz des zum Verbraucher 3 gehörenden KVz-Bereichs 26 entlang gelaufen, und dabei jeder entlanggelaufenen Kante 14,37 der Bedarf 4 des Verbrauchers hinzuaddiert wird. Hierbei ist zu beachten, daß die KVz's möglichst im Schwerpunkt der KVz-Bereich angeordnet werden, wobei der Schwerpunkt auf den nächstliegenden Knoten abgebildet wird, damit kein zusätzlicher Knoten im Netz entsteht. Der Schwerpunkt ermittelt sich dabei aus der Wirtschaftlichkeit des zu verlegenden und kann z.B. durch die Verteilung der Verbraucher 3 und deren Bedarf 4 ermittelt werden. Es sind verschiedenste Algorithmen für die Schwerpunkts- bzw. KVz-Standortbestimmung bekannt, welche auch im erfindungsgemäßen Verfahren zum Einsatz kommen können.

Danach wird in Schritt Vw) jeder Kante 14,37 ein Verzweigungskabel VzK entsprechender Paarigkeit zugeordnet, dessen Kapazität gerade noch die Belastung der jeweiligen Kante 14 deckt. Man erhält dann einen Netzplan (Figur 8) für die einzelnen KVz-Bereiche, dem sofort abgelesen werden kann welche Technik bzw. welche Paarigkeit 35 das zu verlegende Kabel 34 haben muß, um die daran angeschlossenen Verbraucher genügend zu versorgen.

Die Dimensionierung der einzelnen KVz-Bereiche 26 ist damit abgeschlossen.

Als nächstes müssen die KVz's der KVz-Bereiche 26 mit der Vermittlungsstelle verbunden werden. Bei einem großen Gebiet 1 kann es jedoch auch notwendig sein weitere Verteilerknoten anzuordnen, die die KVz's der zuerst erzeugten KVz-Bereiche 26 versorgen und Verteilerbereiche einer neuen Netzebene zusammenzufassen. In beiden Fällen kann der Verfahrensschritt V auf den in Figur 7 dargestellten Baum angewendet werden, wobei jedoch nicht mehr die einzelnen Verbraucher 3 den Bedarf angeben, sondern der Bedarf der KVz-Bereiche 26 der vorherigen Netzebene, der jeweils punktuell durch die auf dem Baum angeordneten KVz's repräsentiert wird. Es können erneut die Belastungen 31 der Kanten bestimmt werden und KVz-Unterbereiche, sowie KVz-Bereiche der neuen Netzebene gebildet werden. Das Verfahren ist ohne weiteres auf diese Netzebene anzuwenden.

Das Verfahren kann auch in einer leicht modifizierten Fassung auf Netze angewendet werden, bei denen es unterschiedliche Bedürfnisse der Verbraucher erforderlich machen, in einer Netzebene mehrere Techniken nebeneinander anzuordnen, welche dann in der nächst höheren oder tieferen Netzebene mittels einer einzigen Technik mit der Vermittlungsstelle 7 verbindbar sind. Dies wird bei der Bereichsabgrenzung der KVz-Unterbereiche 23 und KVz-Bereiche 26 gleichzeitig berücksichtigt.

Das vorbeschriebene erfindungsgemäße Verfahren ist zudem für einen Fachmann ohne weiteres auf andere Netzsysteme, wie z.B. auf Fernwärme- oder Wasserversorgungsnetze anzuwenden. Bei diesen Netzen, werden die Rohre ebenfalls entlang Trassen bzw. Straßen geführt, die an Straßenkreuzungen zusammengeführt oder verzweigt werden. Diese Verbindungspunkte werden im Verfahren dann als Knoten 15 definiert, die Rohrtrassen als Kanten 14. An Stelle der Vermittlungsstelle 7 wird dann ein Hauptverteilerknoten des Fernwärmenetzes eingesetzt. Da der Bedarf im Verfahren eine abstrakte Zahl darstellt, und sich der Fernwärmebedarf der einzelnen Verbraucher ebenfalls mittels einer Zahl darstellen läßt, muß auch diesbezüglich das Verfahren nicht verändert werden, um z.B. auf ein Fernwärmenetz angewendet werden zu können.

### Bezugszeichenliste:

- 1: Versorgungsgebiet
- 2: Häuserblock
- 3: Verbraucher
- 4: Bedarf des Verbrauchers
- 5: Straßen oder vorgegebener Netzleitungsweg
- 6: Straßen- oder Netzleitungskreuzung
- 7: Hauptverteilerknoten (HVK) bzw. Vermittlungsstelle (Vst)
- 8: Verteilerknoten KVz (KVz_{A} - KVz_{E} ≡ KVz's für Bereiche A-E)
- 9: Kabel mit Datenleitungen
- 10: Verbindungsleitung zum Verbraucher
- 11: Straßenkreuzung mit Straßenunterführung des Kabels
- 12: Leitungsweg zum Hauptverteilerknoten
- 13: Kabel für Bereich E ist gemeinsam mit einem Teil des Kabels des Bereichs D in einem Kabelschacht verlegt
- 14: Kante; jeweils eine Straßenseite repräsentierend
- 15: Knoten; Verbindungspunkte der Kanten (14)
- 16: Verbraucherkante zum Verbraucher
- 17: Verbraucher, bei dem die Anbindungskosten an die Vermittlungsstelle (HVK, 7) am geringsten sind
- 18: Markierter Verbindungsweg vom HKV (7) zum Verbraucher (17)
- 19: Verbraucher, dessen Anbindungskosten zum Markierten Verbindungsweg 18 am geringsten sind
- 20: Nachfolgend durch das Verfahren an die schon markierten Kanten (14) und Knoten (15) angeschlossene Verbraucher
- 21: Belastung der Kanten (14)
- 22: Verbraucher in Verfahrensschritt V b)
- 23: KVz-Unterbereich
- 24: KVz-Unterbereiche (23), die mit ihren Grenzkanten (Gk) an einem gemeinsamen Knoten hängen
- 25: Kante in Verfahrensschritt V c)
- 26: KVz-Bereich in Verfahrensschritt V g)
- 27: eliminierter KVz-Bereich; Verfahrensschritt V h)
- 28: Knoten, an dem mehrere KVz-Unterbereiche (23) mit ihren Grenzkanten (Gk) anliegen;
- 29: nächster Knoten; Verfahrensschritt V i)
- 30: Bedarf eines KVz-Bereichs (26)
- 31: Belastung der Kanten (32)
- 32: Kanten des in Verfahrensschritt V s) erzeugten neuen Baumes (33)
- 33: In Verfahrensschritt V s) erzeugter neuer Baum
- 34: Verzweigungskabel (VzK)
- 35: Paarigkeit des Verzweigungskabels (34)
- 36: gemeinsamer Knoten für die beiden KVz-Bereiche 2 und 4, in dem die VzK der beiden KVz-Bereiche parallel geführt sind;
- 37: Kante
- A-E: Bereiche des Versorgungsgebiets (1)
- Ba: Baum
- CuDA: Kupferdoppeladern
- Cu-VzK: Kupferverzweigungskabel
- Gk: Grenzkante eines KVz-Unterbereichs (23)
- Hk: Hauptkabel
- HVK: Vermittlungsstelle (7)
- KVz: Anschlußpunkt für das Verzweigungskabel VzK des KVz-Bereichs bzw. Kabelverzweigungsbereichs
- KVz-Bereich: Kabelverzweigungsbereich
- VzK: Verzweigungskabel (34)

## Patentansprüche

1. Verfahren zur Erzeugung eines Telekommunikations-, Wasser-, Fernwärmeversorgungs- oder Stromnetzes, das innerhalb eines zu versorgenden Gebietes ansässige Verbraucher mit einem Hauptverteilerknoten verbindet, durch:
A) Erstellen eines Planes des Netzes nach folgenden Verfahrensschritten:
I) Generierung eines das Netz repräsentierenden Graphen (G) bestehend aus Kanten (14) und Knoten (15), wobei die Kanten des Graphen alle Verbindungswege des Netzes repräsentieren und sich die Länge und Richtung der Kanten aus der realen Topographie von Straßenabschnitten und vorgebbaren Netzleitungswegen des mittels des Netzes zu versorgenden Gebieten ergibt, und die Knoten Kreuzungspunkte der Straßen und/oder Netzleitungswege repräsentieren.
II) Zuordnung der Verbraucher (3) zum Graphen (G), wobei jeder Verbraucher durch eine Verbraucherkante (16) mit der nächstliegenden Kante (14) oder dem nächstliegenden Knoten (15) des Graphen (G) verbunden wird.
III) Generierung eines Baumes (Ba) durch Streichung nicht benötigter Kanten (14) aus dem Graphen, derart, daß zwischen dem Hauptverteilerknoten (7) und jedem Verbraucher (3) nur genau eine Verbindung zusammengesetzt aus Verbraucherkanten (16), Kanten (14) und Knoten (15) des Baumes (Ba) besteht.
IV) Bestimmung der Belastung der Kanten (14) des Baumes (Ba) entsprechend der den einzelnen Verbrauchern (3) vorgegebenen Bedürfnisse und Anforderungen.
B) Einrichtung des Netzes nach dem entworfenen Plan.

2. Verfahren nach Anspruch 1, **dadurch gekennzeichnet, daß** in einem sich anschließenden fünften Verfahrensschritt V die Abgrenzung von Bereichen, sowie die Dimensionierung und Auswahl einer einzusetzenden Technologie, insbesondere hinsichtlich eines zu verlegenden Kabels oder einer Leitung, für jede Kante (14), Verbraucherkante (16) und Knoten (15) des Baumes (Ba) aufgrund der in den Verfahrensschritten I-IV berechneten Belastungen (21) der Kante (14) erfolgt.

3. Verfahren nach Anspruch 2, **dadurch gekennzeichnet, daß** im Verfahrensschritt II die nächstliegende Kante (14) des Graphen (G) an der Verbindungsstelle zwischen nächstliegender Kante (14) und Verbraucherkante (16) in zwei Kanten (14a) geteilt wird, und die Verbindungsstelle einen neuen Knoten (15a) bildet.

4. Verfahren nach einem der vorherigen Ansprüche, **dadurch gekennzeichnet, daß** der Baum (Ba) im Verfahrensschritt III wie folgt erzeugbar ist:
i) Bestimmen des Verbrauchers (3), dessen Verbindungsweg zum Hauptverteilerknoten (7) entlang des Graphen (G) im Vergleich zu den verbleibenden Verbrauchern die geringsten Anbindungskosten verursacht; der gefundene Verbraucher (3), sowie die Kanten (14) und Knoten (15), welche den Verbindungsweg bilden, werden markiert;
ii) Als nächstes wird der Verbraucher (3) aus der Menge der noch nicht markierten Verbraucher (3) bestimmt, dessen Verbindungsweg zum Hauptverteilerknoten unter Berücksichtigung schon markierter Kanten (14) und Knoten (15) der bisher schon markierten Verbindungswege die geringsten Anbindungskosten verursacht; dieser Verbraucher (3), sowie die Kanten (14) und Knoten (15), die diesen Verbindungsweg bilden, werden markiert;
iii) Schritt ii) wird solange wiederholt, bis alle Verbraucher (3) markiert sind;
iv) Alle Kanten (14) und Knoten (15) des Graphen (G), die nicht markiert sind werden aus dem Graphen (G) eliminiert.

5. Verfahren nach einem der vorherigen Ansprüche, **dadurch gekennzeichnet, daß** die Daten der realen Topographie der Straßenabschnitte und vorgebbaren Netzleitungswege (5) des mittels des Netzes zu versorgenden Gebiets (1) in einer ersten Datenbank abgespeichert sind, und daß die Daten der Verbraucher (3) in einer zweiten Datenbank abgespeichert sind, und die zweite Datenbank unter anderem für jeden Verbraucher (3) dessen Adresse, Koordinaten des Anschlußpunktes und den durch das Netz zu deckenden Bedarf (4), speichert.

6. Verfahren nach Anspruch 5, **dadurch gekennzeichnet, daß** aus den Daten der beiden Datenbanken der Graph (G) und nachfolgend der Baum (Ba) generiert wird.

7. Verfahren zur Erzeugung und Optimierung eines Netzes insbesondere eines Telekommunikationsnetzes nach einem der vorherigen Ansprüche, **dadurch gekennzeichnet, daß** jede Straße des Gebietes bei der Generierung des Graphen (G) in Verfahrensschritt I durch zwei insbesondere parallele Kanten (14) abgebildet wird, wobei jede Kante (14) eine Straßenseite repräsentiert.

8. Verfahren nach Anspruch 7, **dadurch gekennzeichnet, daß** die Verbraucher (3) mittels Übertragungsleitungen verschiedenen Typs, z.B. Kupferleitung bzw. Kupferdoppeladern (CuDA) oder Glasfaser an den Hauptverteilerknoten (7) anschließbar sind, und sich die Verbindungen durch ihre Übertragungskapazitäten und maximale Reichweite voneinander unterscheiden, wobei hierzu Kabel mit unterschiedlicher Anzahl von Kupferdoppeladern (CuDA) oder Glasfasern zur Verfügung stehen, wobei mehrere Verbraucher (3) mittels eines Kabels (VzK) versorgbar sind, derart, daß die benötigte Anzahl von Telefon- und/oder Datenübertragungsleitungen für einen Verbraucher (3) aus einem an einem Verbraucher (3) vorbeiführenden Kabel (VzK) zum Verbraucher (3) herausführbar sind.

9. Verfahren nach Anspruch 7 oder 8, **dadurch gekennzeichnet, daß** die Abgrenzung von Bereichen, sowie die Dimensionierung und Auswahl einer einzusetzenden Technologie, insbesondere hinsichtlich eines zu verlegenden Kabels oder einer Leitung, für jede Kante (14) sich in folgende Schritte unterteilt:
a) Kapazität von Kabelverzweigern (KVz's) und/oder die Reichweite der für den KVz-Bereich einzusetzenden Übertragungstechnik festlegen; wobei sich insbesondere die Kapazität aus der für die KVz's einzusetzenden Technik ergibt;
b) Gehe zu einem Verbraucher (22), dessen Verbraucherkante (16) mit einem Knoten (15) in Verbindung ist, der nur genau mit einer weiteren Kante (14) in Verbindung ist;
c) Gehe von dem in Schritt b) gewählten Verbraucher (3) solange entlang der Verbraucherkanten (16), Kanten (14) und Knoten (15) des Baumes (Ba) in Richtung Vermittlungsstelle (7), bis eine Kante, nachfolgend Grenzkante (GK) genannt, erreicht wird, die an einen Knoten (15) grenzt, der mit einer Kante (25) in Verbindung ist, deren Belastung (21) die Kapazität und/oder die Reichweite des in Schritt a) festgelegten KVz's bzw. KVz-Bereichs übersteigt;
d) Alle Verbraucher (3), die über die Grenzkante (Gk) mit der Vermittlungsstelle (7) in Verbindung sind, werden markiert und einem KVz-Unterbereich (23) zugeordnet;
e) Wiederhole Schritte b) bis d) solange, bis alle Verbraucher (3) KVz-Unterbereiche (23) zugeordnet sind;

10. Verfahren nach Anspruch 9, **dadurch gekennzeichnet, daß** sich an Verfahrensschritt e) ein Verfahrensschritt anschließt, in dem mittels eines rekursiven Verfahrens alle KVz-Unterbereiche (23) zu KVz-Bereichen (26) zusammengefaßt werden, derart, daß die Belastung (30) jedes KVz-Bereichs (26) die Kapazität des in Schritt a) festgelegten KVz's nicht übersteigt; Jeder Verbraucher (3) wird genau einem KVz-Bereich (26) zugewiesen.

11. Verfahren nach einem der vorherigen Ansprüche, **dadurch gekennzeichnet, daß** diejenigen KVz-Unterbereiche (23) aus dem Baum Ba herausgesucht werden, die mit keinem benachbartem KVz-Unterbereich (24), dessen Belastung kleiner oder gleich groß ist, zu einem größeren KVz-Unterbereich (23) zusammengefaßt werden können.

12. Verfahren nach Anspruch 9 oder 10, **dadurch gekennzeichnet, daß** nur die KVz-Unterbereiche (23) zu KVz-Bereichen (26) zusammengefaßt werden, die räumlich nebeneinander angeordnet sind.

13. Verfahren nach einem der Ansprüche 10 bis 12, **dadurch gekennzeichnet, daß** sich an Verfahrensschritt e) folgende Verfahrensschritte anschließen:
f) zuerst werden alle die KVz-Unterbereiche (23) im Baum (Ba) gesucht, deren Belastung zusammen mit der Belastung eines unmittelbar angrenzenden und mit seiner Grenzkante (Gk) am selben Knoten (28) anliegenden, von der Belastung her kleiner oder gleich großen KVz-Unterbereichs (23), größer als die in Verfahrensschritt a) festgelegte Kapazität des KVz's ist;
g) Sofern solche KVz-Unterbereiche (23) im Baum (Ba) aufgefunden werden, werden diese bis auf den kleinsten KVz-Unterbereich (23) zu KVz-Bereichen (26) und die Verfahrensschritte h) bis i) werden für die KVz-Bereiche (26) durchgeführt;
h) Die in Verfahrensschritt g) bestimmten KVz-Bereiche (26) werden vom Baum (Ba) eliminiert bzw. bei der Erzeugung weiterer KVz-Bereiche (26) nicht mehr berücksichtigt, derart, daß alle mittels der Grenzkante (Gk) mit der Vermittlungsstelle (7) in Verbindung stehenden Verbraucher (3), Verbindungskanten (16), Kanten (15) und Knoten (14) vor dem Baum (Ba) abgeschnitten werden oder bei der weiteren Erzeugung der KVz-Bereiche (26) nicht berücksichtigt werden, und zusätzlich die Belastung (30) des eliminierten KVz-Bereiches (27) von der zugewiesenen Belastung (21) aller diesen mit der Vermittlungsstelle (7) verbindenden Kanten (14) subtrahiert wird;
i) daß nachfolgend geprüft wird, ob an dem Knoten (27), welcher den eliminierten KVz-Bereich (27) mit der Vermittlungsstelle (7) verbunden hat, noch Grenzkanten (Gk) von weiteren KVz-Unterbereichen (23) anliegen; Wenn keine weiteren Grenzkanten (Gk) anliegen, dann eliminiere den verbindenden Knoten (28) sowie die Kanten (14) und Knoten (15), die diesen mit einem nächsten Knoten (29) verbinden, an dem eine weitere Grenzkante (Gk) anliegt.

14. Verfahren nach Anspruch 13, **dadurch gekennzeichnet, daß** weitere KVz-Bereiche (26) mittels der nachfolgenden Verfahrensschritte erzeugbar sind:
j) Suche den Knoten (28), der lediglich mit genau einer Kante (14) und mindestens einer Grenzkante (Gk) in Verbindung ist, wobei die Belastung (21) der Kante (14) von allen im Baum (Ba) vorhandenen bzw. noch zu berücksichtigenden Kanten (14) maximal ist;
k) Ist die Summe der Belastung aller an dem gefundenen Knoten (28) anliegenden KVz-Unterbereiche (23) kleiner gleich der Kapazität des KVz's, so werden alle diese KVz-Unterbereiche (23) zu einem neuen KVz-Unterbereich (23) zusammengefaßt, dessen Belastung gleich der Summe der Einzelbelastungen der zusammengefaßten KVz-Unterbereiche (23) ist; in diesem Fall fahre mit Schritt I) fort;
Ist die Summe der Belastungen aller an dem gefundenen Knoten (28) anliegenden KVz-Unterbereiche (23) größer als die Kapazität des KVz's, so werden diejenigen nebeneinander liegenden KVz-Unterbereiche (23) zu einem neuen KVz-Bereich (26) zusammengefaßt, deren Summe von Einzelbelastungen am größten ist, jedoch kleiner als die Kapazität des KVz's ist; Diese KVz-Unterbereiche (23) bzw. der neue KVz-Bereich (26) werden aus dem Baum (Ba) eliminiert bzw. bei der weiteren Erzeugung von KVz-Bereichen (26) nicht berücksichtigt; die Belastung (31) des eliminierten KVz-Bereiches (27) wird anschließend von der zugewiesenen Belastung (21) aller diesen KVz-Bereich (26) mit der Vermittlungsstelle (7) verbindenden Kanten (14) subtrahiert; sofern noch KVz-Unterbereiche (23) im Baum (Ba) vorhanden sind, gehe zu Schritt f), wenn nicht, gehe zu Schritt p);
l) Die den gefundenen Knoten mit der Vermittlungsstelle (7) verbindende Kante (14) ist die Grenzkante (Gk) des neuen KVz-Unterbereichs (23);
m) Liegt diese Grenzkante (Gk) an einem Knoten (15), an dem keine weitere Grenzkante (Gk) anliegt, so wird ausgehend von der Grenzkante (Gk) in Richtung der Vermittlungsstelle (7) der nächste Knoten (28) gesucht, an dem eine weitere Grenzkante (Gk) anliegt;
n) Kann in Schritt m) kein derartiger Knoten (29) gefunden werden, so wird der KVz-Unterbereich (23) zu einem KVz-Bereich (26); gehe in diesem Fall zu Schritt p); wird ein derartiger Knoten (29) gefunden, wird das Verfahren bei Schritt o) fortgesetzt;
o) Die Grenzkante (Gk) des KVz-Unterbereichs (23) wird mit dem in Schritte m) gefundenen Knoten (29) verbunden; wiederhole die Schritte f) bis n) solange, bis in Schritt n) zu Schritt p) verzweigt wird;
p) Ende des Verfahrens zur Erzeugung der KVz-Bereiche (26).

15. Verfahren nach einem der Ansprüche 10 bis 14, **dadurch gekennzeichnet, daß** nach Abschluß des Verfahrens zur Erzeugung der KVz-Bereiche, folgende Verfahrensschritte durchgeführt werden:
q) für jeden KVz-Bereich ein Schwerpunkt in Abhängigkeit von dem Ort und dem Bedarf jedes dem KVz-Bereich zugeordneten Verbrauchers ermittelt wird, wobei ein Knoten des KVz-Bereichs den Schwerpunkt und gleichzeitig den Anschlußpunkt des KVz-Bereichs an ein erstellendes Telekommunikationsnetzes bildet;
r) daß jedem Schwerpunkt die Belastung des KVz-Bereichs zugewiesen wird;
s) daß ein neuer Baum erzeugt wird, derart, daß alle Knoten und Kanten des ursprünglich in Verfahrensschritt III erzeugten Baumes, die die als Knoten festgelegten Schwerpunkte mit der Vermittlungsstelle (7) verbinden, markiert werden; und anschließend alle nicht markierten Verbraucher, Verbraucherkanten, Knoten und Kanten des Baumes eliminiert oder für die sich anschließenden Verfahrensschritte nicht mehr berücksichtigt werden.

16. Verfahren nach Anspruch 15, **dadurch gekennzeichnet, daß** vor Verfahrensschritt f) alle Verbraucher (3), deren Bedarf (4) größer als die in Schritt a) festgelegte Kapazität des KVz's ist, als jeweils ein KVz-Bereich (26) definiert werden, wobei diesen Verbrauchern jeweils soviel Technologie zugeordnet wird, daß der Bedarf des jeweiligen Verbrauchers gedeckt ist, derart, daß dem Knoten (15), an den die Grenzkante (Gk) eines derartigen Verbrauchers (3) angrenzt, für den in Verfahrensschritt s) zu generierenden neuen Baum (33) ein Bedarf zugeordnet wird, der einem mehrfachen der in Schritt a) festgelegten Kapazität entspricht, so daß der Bedarf des Verbrauchers gerade gedeckt ist, und daß danach dieser Verbraucher (3) aus dem Baum (Ba) eliminiert wird, wobei der Knoten der Schwerpunkt bzw. Ort des dem Verbraucher (3) zugeordneten KVz's ist.

17. Verfahren zur Bestimmung der Belastung der Kanten (14) des Baumes (Ba) nach einem der vorherigen Ansprüche, **dadurch gekennzeichnet, daß** zu Beginn allen Kanten (14) des Baumes (Ba) die Belastung "0" (Null) zugeordnet wird, und daß danach nacheinander von jedem Verbraucher (3) entlang der Kanten (14) und Knoten (15) zur Vermittlungsstelle (7) entlang gelaufen wird, und dabei jeder entlanggelaufenen Kante (14) der Bedarf (4) des Verbrauchers hinzuaddiert wird.

18. Verfahren zur Dimensionierung der Übertragungstechnik und Kabel für die mittels des Verfahrensschritts V gebildeten KVz-Bereiche (26) nach einem der Ansprüche 9 bis 17, **dadurch gekennzeichnet, daß** folgende Verfahrensschritt nacheinander durchgeführt werden:
u) allen Kanten (14) des Baumes (Ba) die Belastung "0" (Null) zugeordnet wird;
v) von jedem Verbraucher (3) entlang der Kanten (14) und Knoten (15) zum KVz des zum Verbraucher (3) gehörenden KVz-Bereichs (26) entlang gelaufen wird, und dabei jeder entlanggelaufenen Kante (14) der Bedarf (4) des Verbrauchers hinzuaddiert wird;
w) jeder Kante (14) ein Kabel zugeordnet wird, dessen Kapazität gerade noch die Belastung der jeweiligen Kante (14) deckt;
x) jedem Knoten (15) eine Übertragungstechnik zugeordnet wird, die die Belastung des jeweiligen Knotens (15) deckt.

19. Verfahren nach Anspruch 18, **dadurch gekennzeichnet, daß** nach Verfahrensschritt s) auf den neuen Baum (33) die Verfahrensschritte IV und a) bis s) und u) bis x) angewendet werden, wobei in Schritt a) eine andere Kapazität und Reichweite für die neu zu erzeugenden KVz-Bereiche (26) einer neuen Baumebene festlegbar ist.

20. Computer-Programm für die Datenverarbeitung zur Durchführung aller Schritte eines Verfahrens nach einem der vorherigen Ansprüche

## Claims

1. Method for producing a telecommunications, water, district-heating-supply or electricity network connecting resident consumers to a main distribution node within an area which is to be supplied, through:
A) creation of a plan of the network according to the following method steps:
I) generation of a graph (G) representing the network and consisting of edges (14) and nodes (15), the edges of the graph representing all the connecting paths of the network, and the length and direction of the edges resulting from the real topography of road sections and predeterminable network line paths of the area which is to be supplied by means of the network, and the nodes representing intersection points of the roads and/or network line paths;
II) assignment of the consumers (3) to the graph (G), each consumer being connected by a consumer edge (16) to the nearest edge (14) or nearest node (15) of the graph (G);
III) generation of a tree (Ba) by deleting unrequired edges (14) from the graph, such that between the main distribution node (7) and each consumer (3) there is only precisely one connection composed of consumer edges (16), edges (14) and nodes (15) of the tree (Ba);
IV) determination of the loading of the edges (14) of the tree (Ba) according to the needs and requirements predetermined for the individual consumers (3);
B) establishment of the network according to the drawn-up plan.

2. Method according to claim 1 ,**characterized in that**, in a following fifth method step V, there is the demarcation of areas as well as the dimensioning and selection of a technology to be used, particularly with regard to a cable or line to be laid, for each edge (14), consumer edge (16) and node (15) of the tree (Ba) on the basis of the loadings (21) of the edge (14) calculated in method steps I-IV.

3. Method according to claim 2, **characterized in that**, in method step II, the nearest edge (14) of the graph (G) is divided into two edges (14a) at the connecting point between nearest edge (14) and consumer edge (16), the connecting point forming a new node (15a).

4. Method according to any one of the preceding claims, **characterized in that** the tree (Ba) can be produced as follows in method step III:
i) determination of the consumer (3) whose connecting path to the main distribution node (7) along the graph (G) causes the lowest connection costs in comparison with the remaining consumers; the thus determined consumer (3) as well as the edges (14) and nodes (15) forming the connecting path are marked;
ii) next, that consumer (3) out of the number of not yet marked consumers (3) is determined whose connecting path to the main distribution node causes the lowest connection costs, account being taken of already marked edges (14) and nodes (15) of the previously marked connecting paths; that consumer (3) as well as the edges (14) and nodes (15) forming said connecting path are marked;
iii) step ii) is repeated until all consumers (3) have been marked;
iv) all edges (14) and nodes (15) of the graph (G) which have not been marked are eliminated from the graph (G).

5. Method according to any one of the preceding claims, **characterized in that** the data of the real topography of the road sections and predeterminable network line paths (5) of the area (1) to be supplied by means of the network are stored in a first database and **in that** the data of the consumers (3) are stored in a second database, and the second database stores for each consumer (3), among other things, the address of the consumer (3), the coordinates of the connection point and the demand (4) to be covered by the network.

6. Method according to claim 5, **characterized in that** the graph (G) and then the tree(Ba) are generated from the data of the two databases.

7. Method for producing and optimizing a network, more particularly a telecommunications network, according to any one of the preceding claims, **characterized in that**, during generation of the graph (G) in method step I, each street of the area is mapped by two, more particularly parallel, edges (14), each edge (14) representing one side of the street.

8. Method according to claim 7, **characterized in that** the consumers (3) are connectable to the main distribution node (7) by means of transmission lines of various types, e.g. copper cable or twin copper wires (CuDA) or glass fibre, and **in that** the connections differ from each other through their transmission capacities and maximum range, there being available for this purpose cables with different numbers of twin copper wires (CuDA) or glass fibres, wherein two or more consumers (3) can be supplied by means of one cable (VzK), such that the required number of telephone and/or data transmission lines for a consumer (3) can be brought out to a consumer (3) from a cable (VzK) which passes the consumer (3).

9. Method according to claim 7 or 8, **characterized in that** the demarcation of areas as well as the dimensioning and selection of a technology to be used, particularly with regard to a cable or line to be laid, is subdivided for each edge (14) into the following steps:
a) determine the capacity of feeder distribution interfaces (FDIs) and/or the range of the transmission technology to be used for the FDI area, the capacity, in particular, becoming apparent from the technology to be used for the FDIs;
b) go to a consumer (22) whose consumer edge (16) is connected to a node (15) connected to only precisely one other edge (14);
c) go from the consumer (3) selected in step b) along the consumer edges (16), edges (14) and nodes (15) of the tree (Ba) towards the switching centre (7) until reaching an edge, hereinafter referred to as the adjoining edge (GK), which adjoins a node (15) connected to an edge (25) whose loading (21) exceeds the capacity and/or range of the FDI or FDI area determined in step a);
d) all consumers (3) connected to the switching centre (7) via the adjoining edge (Gk) are marked and assigned to an FDI subarea (23);
e) repeat steps b) to d) until all consumers (3) have been assigned to FDI subareas (23).

10. Method according to claim 9, **characterized in that** method step e) is followed by a method step in which, by means of a recursive method, all FDI subareas (23) are combined to form FDI areas (26), such that the loading (30) of each FDI area (26) does not exceed the capacity of the FDI determined in step a); each consumer (3) is assigned to precisely one FDI area (26).

11. Method according to any one of the preceding claims, **characterized in that** those FDI subareas (23) are picked out from the tree Ba which cannot be combined to form a larger FDI subarea (23) with any adjacent FDI subarea (24) whose loading is smaller or equal.

12. Method according to claim 9 or 10, **characterized in that** only those FDI subareas (23) are combined to form FDI areas (26) which are physically juxtaposed.

13. Method according to any one of claims 10 to 12, **characterized in that** method step e) is followed by the following method steps:
f) first, all those FDI subareas (23) in the tree (Ba) are found whose loading - together with the loading of a directly adjacent FDI subarea (23) contacting the same node (28) with its adjoining edge (Gk) and being smaller or equal in terms of loading - is greater than the capacity of the FDI determined in method step a);
g) if such FDI subareas (23) are found in the tree (Ba), they are combined down to the smallest FDI subarea (23) to form FDI areas (26) and method steps h) to i) are performed for the FDI areas (26);
h) the FDI areas (26) determined in method step g) are eliminated from the tree (Ba) or are no longer taken into consideration in the production of further FDI areas (26), such that all consumers (3), connecting edges (16), edges (15) and nodes (14) connected to the switching centre (7) by means of the adjoining edge (Gk) are cut off from the tree (Ba) or are not taken into consideration in the further production of the FDI areas (26), and, in addition, the loading (30) of the eliminated FDI area (27) is subtracted from the assigned loading (21) of all those edges (14) which connect said FDI area (27) to the switching centre (7);
i) it is then checked whether the node (27) connecting the eliminated FDI area (27) to the switching centre (7) is still contacted by adjoining edges (Gk) of other FDI subareas (23); if there are no other adjoining edges (Gk) in contact, then eliminate the connecting node (28) as well as the edges (14) and nodes (15) which connect said node (28) to a nearest node (29) contacted by another adjoining edge (Gk).

14. Method according to claim 13, **characterized in that** further FDI areas (26) can be produced by means of the following method steps:
j) find the node (28) which is connected merely to precisely one edge (14) and to at least one adjoining edge (Gk), the loading (21) of the edge (14) being the greatest of all those edges (14) in the tree (Ba) which still have to be taken into consideration;
k) if the sum of the loading of all the FDI subareas (23) in contact with the found node (28) is smaller than or equal to the capacity of the FDI, then all said FDI subareas (23) are combined to form a new FDI subarea (23) whose loading is equal to the sum of the individual loadings of the combined FDI subareas (23); in this case, continue with step I);
if the sum of the loadings of all the FDI subareas (23) in contact with the found node (28) is greater than the capacity of the FDI, then those juxtaposed FDI subareas (23) whose sum of individual loadings is greatest but still smaller than the capacity of the FDI are combined to form a new FDI area (26); these FDI subareas (23) or the new FDI area (26) are eliminated from the tree (Ba) or are not taken into consideration in the further production of FDI areas (26); the loading (31) of the eliminated FDI area (27) is then subtracted from the assigned loading (21) of all those edges (14) which connect said FDI area (26) to the switching centre (7); if there are still FDI subareas (23) left in the tree (Ba), go to step f); if not, go to step p);
I) the edge (14) connecting the found node to the switching centre (7) is the adjoining edge (Gk) of the new FDI subarea (23);
m) if this adjoining edge (Gk) is in contact with a node (15) not contacted by any other adjoining edge (Gk), then, starting from the adjoining edge (Gk) and working towards the switching centre (7), find the next node (28) which is contacted by another adjoining edge (Gk);
n) if, in step m), no such node (29) can be found, then the FDI subarea (23) becomes an FDI area (26); in this case, go to step p); if such a node (29) is found, continue with step o);
o) connect the adjoining edge (Gk) of the FDI subarea (23) to the node (29) found in step m); repeat steps f) to n) until step n) branches to step p);
p) end of the method for producing the FDI areas (26).

15. Method according to any one of claims 10 to 14, **characterized in that**, after completion of the method for producing the FDI areas, the following method steps are performed:
q) for each FDI area a focal point is determined as a function of the locus and demand of each consumer assigned to the FDI area, wherein a node of the FDI area forms the focal point and at the same time the point of connection of the FDI area to a telecommunications network which is to be created;
r) each focal point is assigned the loading of the FDI area;
s) a new tree is produced, such that all the nodes and edges of the tree originally produced in method step III and connecting the focal points designated as nodes to the switching centre (7) are marked; and then all unmarked consumers, consumer edges, nodes and edges of the tree are eliminated or are no longer taken into consideration for the following method steps.

16. Method according to claim 15, **characterized in that**, before method step f), all consumers (3) whose demand (4) is greater than the capacity of the FDI determined in step a) are each defined as an FDI area (26), wherein such consumers are each assigned so much technology that the demand of the respective consumer is covered, such that the node (15) adjoined by the adjoining edge (Gk) of such a consumer (3) is assigned - for the new tree (33) to be generated in method step s) - a demand which corresponds to a multiple of the capacity determined in step a), with the result that the demand of the consumer is just covered, and **in that**, thereafter, such consumer (3) is eliminated from the tree (Ba), the node being the focal point or locus of the FDI assigned to the consumer (3).

17. Method for determining the loading of the edges (14) of the tree (Ba) according to any one of the preceding claims, **characterized in that**, at the start, all the edges (14) of the tree (Ba) are assigned the loading "0" (zero), and **in that**, thereafter, a run is made consecutively from each consumer (3) along the edges (14) and nodes (15) to the switching centre (7), wherein the demand (4) of the consumer is added to each edge (14) which is run along.

18. Method for dimensioning the transmission technology and cables for the FDI areas (26) formed by means of method step V according to any one of claims 9 to 17, **characterized in that** the following method steps are performed consecutively:
u) all the edges (14) of the tree (Ba) are assigned the loading "0" (zero);
v) a run is made from each consumer (3) along the edges (14) and nodes (15) to the FDI of the FDI area (26) belonging to the consumer (3), wherein the demand (4) of the consumer is added to each edge (14) which is run along;
w) each edge (14) is assigned a cable whose capacity just covers the loading of the respective edge (14);
x) each node (15) is assigned a transmission technology which covers the loading of the respective node (15).

19. Method according to claim 18, **characterized in that**, after method step s), method steps IV and a) to s) and u) to x) are applied to the new tree (33), it being possible in step a) to specify a different capacity and range for the newly produced FDI areas (26) of a new tree level.

20. Computer program for data processing for performing all the steps of a method according to any one of the preceding claims.

## Revendications

1. Procédé servant à générer un réseau de télécommunication, d'eau, de chauffage à distance ou de courant, reliant à l'aide d'un noeud de répartiteur principal les consommateurs situés sur un territoire à desservir, et comprenant :
A) l'élaboration d'un plan du réseau en passant par les étapes de procédé suivantes :
I) génération d'un graphe (G) représentant le réseau et composé d'arêtes (14) et de noeuds (15), les arêtes du graphe représentant tous les itinéraires de liaison du réseau et la longueur et la direction des arêtes résultant de la topographie réelle de tronçons de rues/routes et itinéraires spécifiables des lignes/conduites de réseau sur le territoire à desservir au moyen du réseau, et les noeuds représentant les croisements des rues/routes et/ou des itinéraires des lignes/conduites de réseau ;
II) affectation des consommateurs (3) au graphe (G), chaque consommateur étant relié par une arête de consommateurs (16) à l'arête (14) la plus proche ou avec le noeud (15) le plus proche du graphe (G) ;
III) génération d'une arborescence (Ba) par suppression, hors du graphe, des arêtes (14) non nécessitées, de sorte qu'entre le noeud de répartiteur principal (7) et chaque consommateur (3), il n'existe exactement qu'une liaison composée des arêtes de consommateurs (16), des arêtes (14) et des noeuds (15) de l'arborescence (Ba) ;
IV) détermination de la charge appliquée aux arêtes (14) de l'arborescence (Ba) conformément aux besoins et exigences spécifiés par les différents consommateurs (3) ;
B) installation du réseau selon le plan ébauché.

2. Procédé selon la revendication 1,**caractérisé en ce que** dans une cinquième étape V du procédé ont lieu la délimitation des domaines ainsi que le dimensionnement et la sélection d'une technologie à mettre en oeuvre, notamment quant à un câble ou une ligne/conduite à poser, pour chaque arête (14), arête de consommateurs (16) et noeud (15) de l'arborescence (Ba), sur la base des charges (21) appliquées à l'arête (14) et calculées aux étapes I-VI du procédé.

3. Procédé selon la revendication 2,**caractérisé en ce que** dans l'étape II du procédé l'on partage l'arête (14) la plus proche du graphe (G) en deux arêtes (14a) au point de jonction entre l'arête (14) la plus proche et l'arête de consommateurs (16), et que le point de jonction forme un nouveau noeud (15a).

4. Procédé selon l'une des revendications précédentes, **caractérisé en ce que** l'arborescence (Ba) est générable comme suit au cours de l'étape III du procédé :
i) déterminer le consommateur (3) dont l'itinéraire de liaison vers le noeud de répartiteur principal (7) le long du graphe (G) occasionne les moindres frais d'adduction comparé aux consommateurs restants ; marquer le consommateur trouvé (3) ainsi que les arêtes (14) et les noeuds (15) formant l'itinéraire de liaison ;
ii) ensuite, déterminer le consommateur (3), puisé dans le corpus de consommateurs non encore marqués (3), dont l'itinéraire de liaison menant au noeud de répartiteur principal - compte tenu des arêtes (14) et des noeuds (15) déjà marqués des itinéraires de liaison marqués jusqu'ici - occasionne les frais d'adduction les plus réduits ; marquer ce consommateur (3) ainsi que les arêtes (14) et les noeuds (15) formant cet itinéraire de liaison ;
iii) répéter l'étape ii) tant que tous les consommateurs (3) sont marqués ;
iv) éliminer du graphe (G) toutes les arêtes (14) et tous les noeuds (15) du graphe (G) qui n'ont pas été marqués.

5. Procédé selon l'une des revendications précédentes, **caractérisé en ce que** les données de la topographie réelle des tronçons de rue/route et des itinéraires spécifiables des lignes/conduites de réseau (5) sur le territoire à desservir (1) au moyen du réseau sont mémorisées dans une première base de données, que les données des consommateurs (3) sont mémorisées dans une seconde base de données, et que cette seconde base de données mémorise, entre autres, pour chaque consommateur (3) son adresse, les coordonnées du point de raccordement et les besoins (4) que doit couvrir le réseau.

6. Procédé selon la revendication 5, **caractérisé en ce que** la génération du graphe (G) et ensuite celle de l'arborescence (Ba) ont lieu à partir des données de ces deux bases de données.

7. Procédé selon l'une des revendications précédentes servant à générer et optimiser un réseau, notamment un réseau de télécommunication, **caractérisé en ce que** chaque rue/route du territoire, lors de la génération du graphe (G) au cours de l'étape I du procédé, est illustrée par deux arêtes (14) notamment parallèles, chaque arête (14) représentant un côté de la rue/route.

8. Procédé selon la revendication 7, **caractérisé en ce que** les consommateurs (3) sont raccordables au noeud de répartiteur principal (7) au moyen de lignes de transmission de type différent, par exemple d'une ligne en cuivre, d'une paire en cuivre (CuDa) ou d'une fibre de verre, et que les liaisons se distinguent les unes des autres par leurs capacités de transmission et leur portée maximale, des câbles étant disponibles qui contiennent des nombres différents de paires en cuivre (CuDa) ou de fibres de verre, plusieurs consommateurs (3) étant alimentables au moyen d'un câble (VzK), de sorte que le nombre requis de lignes de type téléphonique et/ou de transmission de données pour un consommateur (3) soit dérivable vers le consommateur (3) à partir d'un câble (VzK) longeant un consommateur (3).

9. Procédé selon la revendication 7 ou 8, **caractérisé en ce que** la délimitation des domaines ainsi que le dimensionnement et la sélection d'une technologie à mettre en oeuvre, notamment en ce qui concerne un câble ou une ligne à poser, se décomposent pour chaque arête (14) en les étapes suivantes :
a) fixer la capacité des sous-répartiteurs (KVz) et/ou la portée de la technique de transmission à mettre en oeuvre pour le domaine KVz, la capacité notamment découlant de la technique à mettre en oeuvre pour les KVz ;
b) aller vers un consommateur (22) dont l'arête de consommateurs (16) est en liaison avec un noeud (15) qui n'est en liaison qu'avec une autre arête (14) exactement ;
c) partir du consommateur (3) choisi à l'étape b) et longer les arêtes de consommateurs (16), arêtes (14) et noeuds (15) de l'arborescence (Ba) en direction du commutateur (7) jusqu'à atteindre une arête, ci-après désignée arête limite (Gk), qui soit limitrophe d'un noeud (15) lui-même en liaison avec une arête (25) dont la charge (21) appliquée dépasse la capacité et/ou la portée du ou des KVz fixés à l'étape a) ;
d) marquer tous les consommateurs (3) en liaison avec le commutateur (7) via l'arête limite (Gk) et les attribuer à un sous-domaine KVz (23) ;
e) répéter les étapes b) à d) jusqu'à ce que tous les consommateurs (3) soient attribués à des sous-domaines KVz (23) ;

10. Procédé selon la revendication 9, **caractérisé en ce que** l'étape e) du procédé est suivie d'une étape au cours de laquelle on rassemble, au moyen d'un procédé récursif, tous les sous-domaines KVz (23) en domaines KVz (26) de telle sorte que la charge (30) appliquée à chaque domaine KVz (26) ne dépasse pas la capacité du KVz fixée à l'étape a) ; on assigne chaque consommateur (3) à exactement un domaine KVz (26).

11. Procédé selon l'une des revendications précédentes, **caractérisé en ce que** l'on recherche dans l'arborescence (Ba), et les en extrait, les sous-domaines KVz (23) qu'il n'est possible de rassembler avec aucun sous-domaine KVz (24) voisin, dont la charge appliquée est inférieure ou égale, pour former un sous-domaine KVz (23) de plus grande taille.

12. Procédé selon la revendication 9 ou 10 **caractérisé en ce que** l'on rassemble en domaines KVz (26) uniquement les sous-domaines KVz (23) juxtaposés.

13. Procédé selon l'une des revendications 10 à 12, **caractérisé en ce que** l'étape de procédé e) est suivie des étapes de procédé décrites ci-après :
f) on recherche dans un premier temps tous les sous-domaines KVz (23), dans l'arborescence (Ba), dont la charge appliquée - ajoutée à celle d'un sous-domaine KVz (23) directement limitrophe de taille inférieure ou égale par la charge appliquée et dont une arête limite (Gk) applique contre le même noeud (28) - est supérieure à la capacité du KVz fixée à l'étape a) du procédé ;
g) si de tels sous-domaines KVz (23) sont trouvés dans l'arborescence (Ba), ils deviennent, sauf le sous-domaine KVz (23) le plus petit, des domaines KVz (26) puis les étapes h) à i) du procédé se déroulent pour les domaines KVz (26) ;
h) de l'arborescence (Ba), on élimine les domaines KVz déterminés à l'étape g) du procédé ou l'on n'en tient plus compte lors de la génération d'autres domaines KVz (26), à savoir que l'on coupe et détache tous les
consommateurs (3), arêtes de liaison (16), arêtes (15) et noeuds (14) situés devant l'arborescence (Ba) et se trouvant par l'arête limite (Gk) en liaison avec le commutateur (7), ou l'on n'en tient plus compte lors de la poursuite de la génération des domaines KVz (26), et l'on soustrait en plus la charge (30), appliquée au domaine KVz (27) éliminé, de la charge attribuée (21) à toutes les arêtes (14) reliant ce domaine au commutateur (7) ;
i) **en ce qu'**ensuite l'on vérifie si au noeud (27) qui a relié le domaine KVz éliminé (27) au commutateur (7) sont appliquées encore les arêtes limites (Gk) d'autres sous-domaines KVz (23) ; si aucune autre arête limite (Gk) n'y est appliquée, on élimine alors le noeud (28) opérant la liaison ainsi que les arêtes (14) et noeuds (15) qui le relient au noeud (29) le plus proche auquel une autre arête limite (Gk) est appliquée.

14. Procédé selon la revendication 13, **caractérisé en ce qu'**il est possible de générer d'autres domaines KVz (26) au moyen des étapes de procédé suivantes :
j) rechercher le noeud (28) qui ne se trouve en liaison qu'avec une arête (14) et au moins une arête limite (Gk), la charge (21) appliquée à l'arête (14) étant la plus élevée de toutes les arêtes (14) présentes dans l'arborescence (Ba) ou dont il faut encore tenir compte ;
k) si la somme de la charge appliquée à tous les sous-domaines KVz (23) du noeud (28) trouvé est inférieure ou égale à la capacité du KVz, rassembler tous ces sous-domaines KVz (23) en un nouveau sous-domaine (23) dont la charge appliquée est égale à la somme des charges individuelles appliquées aux sous-domaines KVz (23) rassemblés ; si c'est le cas, passer à l'étape I) ; si la somme des charges appliquées à tous les sous-domaines KVz (23) du noeud (28) trouvé est supérieure à la capacité du KVz, rassembler en un nouveau domaine KVz (26) les sous-domaines KVz (23) juxtaposés dont la somme des charges individuelles appliquées est la plus élevée, mais toutefois inférieure à la capacité du KVz ; ces sous-domaines KVz (23) ou le nouveau domaine KVz (26) sont éliminés de l'arborescence (Ba) et/ou laissés de côté au moment de la génération de domaines KVz (26) ; soustraire ensuite la charge (31), appliquée au domaine KVz (27) éliminé, de la charge (21) assignée à tous les bords (14) reliant ce domaine KVz (26) avec le commutateur (7) ; s'il reste encore des sous-domaines KVz (23) dans l'arborescence (Ba), passer à l'étape f) ; s'il n'en reste pas, passer à l'étape p) ;
l) l'arête (14) reliant le noeud trouvé avec le commutateur (7) est l'arête limite (Gk) du nouveau sous-domaine KVz (23) ;
m) si cette arête limite (Gk) est limitrophe d'un noeud (15) auquel aucune autre arête limite (Gk) est appliquée, rechercher alors, en partant du bord limite (Gk) en direction du commutateur (7), le noeud le plus proche (28) auquel une autre arête limite (Gk) est appliquée;
n) si à l'étape m) il est impossible de trouver un tel noeud (29), le sous-domaine KVz (23) devient un domaine KVz (26) ; passer dans ce cas à l'étape p) ; s'il est possible de trouver un tel noeud (29), poursuivre en passant à l'étape o) du procédé ;
o) relier l'arête limite (Gk) du sous-domaine KVz (23) au noeud (29) trouvé à l'étape m) ; répéter le contenu des étapes f) à n) jusqu'au renvoi à l'étape n) à l'étape p) ;
p) fin du procédé de génération des domaines KVz (26).

15. Procédé selon l'une des revendications 10 à 14, **caractérisé en ce qu'une** fois achevé le procédé de génération des domaines KVz, les étapes suivantes du procédé sont effectuées:
q) pour chaque domaine KVz, déterminer un axe dépendant du lieu et des besoins de chaque consommateur assigné au domaine KVz, un noeud du domaine KVz formant l'axe et en même temps le point de raccordement du domaine KVz à un réseau de télécommunication à réaliser ;
r) qu'à chaque axe est assignée la charge du domaine KVz ;
s) que l'on génère une nouvelle arborescence en marquant tous les noeuds et arêtes de l'arborescence, générée primitivement à l'étape III du procédé, qui relient au central de commutation (7) les axes fixés en tant que noeuds ; et qu'ensuite on élimine tous les consommateurs non encore marqués, arêtes de consommateurs, noeuds et arêtes de l'arborescence ou que l'on n'en tient plus compte dans les étapes du procédé qui s'ensuivent.

16. Procédé selon la revendication 15, **caractérisé en ce qu'avant** l'étape de procédé f) l'on définit comme étant un domaine KVz (26) tous les consommateurs (3) dont les besoins (4) dépassent la capacité du KVz fixée à l'étape a), en assignant à chacun de ces consommateurs autant de technologie que nécessaire pour couvrir les besoins du consommateur concerné, de sorte que l'on assigne au noeud (15), dont l'arête limite (Gk) d'un tel consommateur (3) est limitrophe, des besoins pour la nouvelle arborescence (33) à générer à l'étape s) du procédé, lesquels besoins correspondent à un multiple de la capacité fixée à l'étape a), de sorte que les besoins du consommateur soient tout juste couverts et qu'ensuite ce consommateur (3) soit éliminé de l'arborescence (Ba), le noeud formant l'axe ou le site du KVz assigné au consommateur (3).

17. Procédé selon l'une des revendications précédentes, destiné à déterminer la charge appliquée aux arêtes (14) de l'arborescence (Ba), **caractérisé en ce qu'**au début l'on applique à toutes les arêtes (14) de l'arborescence (Ba) la charge "0" (zéro) et qu'ensuite l'on se rend successivement de chaque consommateur (3) au commutateur (7) le long des arêtes (14) et des noeuds (15), en ajoutant à chaque arête (14) longée les besoins (4) du consommateur.

18. Procédé selon l'une des revendications 9 à 17, de dimensionnement de la technique de transmission et des câbles pour les domaines KVz (26) formés au moyen de l'étape V du procédé, **caractérisé en ce que** le procédé passe successivement par les étapes suivantes :
u) appliquer la charge "0" (zéro) à toutes les arêtes (14) de l'arborescence (Ba) ;
v) partir du consommateur (3) vers le KVz appartenant au domaine KVz (26) du consommateur (3), en longeant les arêtes (14) et noeuds (15), et ajouter à chaque arête (14) longée les besoins (4) du consommateur ;
w) affecter à chaque arête un câble (14) dont la capacité couvre tout juste la charge appliquée à l'arête (14) concernée ;
x) affecter à chaque noeud (15) une technique de transmission correspondant à la charge de chaque noeud respectif (15).

19. Procédé selon la revendication 18, **caractérisé en ce qu'**après l'étape s) du procédé l'on utilise sur la nouvelle arborescence (33) les étapes de procédé IV et a) à s) et u) à x), la fixation d'une capacité et d'une portée différentes étant possible à l'étape a) pour les nouveaux domaines KVz (26) à générer d'un nouveau niveau d'arborescence.

20. Programme informatique servant au traitement des données permettant de réaliser toutes les étapes d'un procédé selon l'une des revendications précédentes.
